# EUROPEAN PATENT APPLICATION

(11) **EP 4 503 698 A1**
(43) Date of publication of application: **05.02.2025**
(21) Application number: 23781301.9
(22) Date of filing: 28.03.2023
(51) Int. Cl.: H04W 16/28, H04B 7/0408, H04B 7/06, H04B 7/08, H04W 72/27, H04B 7/155, H04W 84/04

(54) **METHOD AND DEVICE FOR PERFORMING ADAPTIVE BEAMFORMING IN WIRELESS COMMUNICATION SYSTEM**

(30) Priority: 31.03.2022 KR 20220040553; 29.09.2022 KR 20220124319
(71) Applicant: LG Electronics Inc., Yeongdeungpo-gu Seoul 07336 (KR)
(72) Inventor: BAN, Choongsang, Seoul 06772 (KR); YOU, Hyangsun, Seoul 06772 (KR); KO, Hyunsoo, Seoul 06772 (KR); KIM, Seonwook, Seoul 06772 (KR); SHIM, Jaenam, Seoul 06772 (KR)
(74) Representative: Plasseraud IP
(86) International application number: PCT/KR2023/004102
(87) International publication number: WO 2023/191446

(57) **Abstract**

Various embodiments of the present disclosure provide a method performed by an electronic device in a wireless communication system. The method may comprise receiving, from a base station (BS), a radio resource control (RRC) signal including information related to a number of bits in a downlink control information (DCI) field required to represent indicatable beams, receiving, from the base station, DCI including the DCI field for a beam indication of a beam used in an access link between the electronic device and at least one user equipment (UE) among the indicatable beams, and transmitting or receiving a signal with the at least one UE based on the beam indication.

## Description

### [Technical Field]

The present disclosure relates to a wireless communication system. More specifically, the present disclosure relates to a method and device for performing adaptive beamforming in a wireless communication system.

### [Background Art]

Wireless communication systems have been widely deployed to provide various types of communication services such as voice or data. In general, the wireless communication system is a multiple access system capable of supporting communication with multiple users by sharing available system resources (bandwidth, transmission power, etc.). Examples of multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, and a Single Carrier Frequency Division Multiple Access (SC-FDMA) system.

In particular, as many communication devices require large communication capacity, more enhanced mobile broadband (eMBB) communication technology than the existing radio access technology (RAT) is proposed. Not only massive machine type communications (mMTC) which provide various services anytime and anywhere by connecting a large number of devices and objects, but also a communication system considering service/user equipment (UE) sensitive to reliability and latency are proposed. Various technical configurations for this are proposed.

### [Disclosure]

### [Technical Problem]

In order to solve the above-described problems, the present disclosure provides a method and device for performing a low latency and ultrahigh speed transmission in a wireless communication system.

In order to solve the above-described problems, the present disclosure provides a method of determining, configuring, and indicating a transmit/receive beam index required to perform adaptive beamforming in a link between a remote unit (RU) of a network-controlled repeater (NCR) and a UE during an operation of the NCR in an NR environment.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

### [Technical Solution]

A method of operating an electronic device in a wireless communication system according to an embodiment of the present disclosure may comprise receiving, from a base station (BS), a radio resource control (RRC) signal including information related to a number of bits in a downlink control information (DCI) field required to represent indicatable beams, receiving, from the base station, DCI including the DCI field for a beam indication of a beam used in an access link between the electronic device and at least one user equipment (UE) among the indicatable beams, and transmitting or receiving a signal with the at least one UE based on the beam indication.

The method may further comprise, before receiving the RRC signal, transmitting, to the base station, information related to first indices of a plurality of available beams in the access link, and receiving information on at least one candidate beam set related to some of the plurality of available beams. The indicatable beams may be related to candidate beams included in the at least one candidate beam set. A beam indication may include at least one of information on a second index of at least one downlink transmit beam (DL Tx beam) of the candidate beams or information on a third index of at least one uplink receive beam (UL Rx beam) of the candidate beams.

The at least one candidate beam set may include a DL Tx candidate beam set related to the second index and a UL Rx candidate beam set related to the third index, or one candidate beam set of the at least one candidate beam set may include DL Tx candidate beams related to the second index and UL Tx candidate beams related to the third index.

The at least one UE may include a plurality of UEs, and the at least one candidate beam set may include a plurality of candidate beam sets. Each of the plurality of candidate beam sets may be related to each of the plurality of UEs based on a UE identifier (ID) of each of the plurality of UEs.

The at least one candidate beam set may include a plurality of candidate beam pairs, and each of the plurality of candidate beam pairs may include one DL Tx candidate beam and one UL Tx candidate beam. The second index and the third index may be related to a DL Tx candidate beam and an UL Tx candidate beam in one candidate beam pair of the plurality of candidate beam pairs.

First information related to the first indices of the plurality of available beams may include information related to a beam width of each of the plurality of available beams, and information related to a plurality of multi-beam sets. Each of the plurality of multi-beam sets may be related to a combination of a plurality of DL Tx beams simultaneously capable of a downlink transmission among the plurality of available beams or a combination of a plurality of UL Rx beams simultaneously capable of an uplink reception among the plurality of available beams.

Second information may include information related to a mapping relationship between the at least one candidate beam set and the plurality of multi-beam sets, and third information may include an index of one multi-beam set of the plurality of multi-beam sets based on the mapping relationship. A total of beam widths of the plurality of multi-beam sets configured with the mapping relationship with the at least one candidate beam set may be less than or equal to a set beam width.

A method of operating a base station (BS) in a wireless communication system according to an embodiment of the present disclosure may comprise transmitting, to an electronic device, a radio resource control (RRC) signal including information related to a number of bits in a downlink control information (DCI) field required to represent indicatable beams, and transmitting, to the electronic device, DCI including the DCI field for a beam indication of a beam used in an access link between the electronic device and at least one user equipment (UE) among the indicatable beams. The beam indication may be related to a transmission or a reception of a signal for the at least one UE of the electronic device in the access link.

The method may further comprise, before transmitting the RRC signal, transmitting, to the electronic device, information related to first indices of a plurality of available beams in the access link, and transmitting information on at least one candidate beam set related to some of the plurality of available beams. The indicatable beams may be related to candidate beams included in the at least one candidate beam set. The beam indication may include at least one of information on a second index of at least one downlink transmit beam (DL Tx beam) of the candidate beams or information on a third index of at least one uplink receive beam (UL Rx beam) of the candidate beams.

The at least one candidate beam set may include a DL Tx candidate beam set related to the second index and a UL Rx candidate beam set related to the third index, or one candidate beam set of the at least one candidate beam set may include DL Tx candidate beams related to the second index and UL Tx candidate beams related to the third index.

The at least one UE may include a plurality of UEs, and the at least one candidate beam set may include a plurality of candidate beam sets. Each of the plurality of candidate beam sets may be related to each of the plurality of UEs based on a UE identifier (ID) of each of the plurality of UEs.

The at least one candidate beam set may include a plurality of candidate beam pairs, and each of the plurality of candidate beam pairs may include one DL Tx candidate beam and one UL Tx candidate beam. The second index and the third index may be related to a DL Tx candidate beam and an UL Tx candidate beam in one candidate beam pair of the plurality of candidate beam pairs.

First information related to the first indices of the plurality of available beams may include information related to a beam width of each of the plurality of available beams, and information related to a plurality of multi-beam sets. Each of the plurality of multi-beam sets may be related to a combination of a plurality of DL Tx beams simultaneously capable of a downlink transmission among the plurality of available beams or a combination of a plurality of UL Rx beams simultaneously capable of an uplink reception among the plurality of available beams.

Second information may include information related to a mapping relationship between the at least one candidate beam set and the plurality of multi-beam sets, and third information may include an index of one multi-beam set of the plurality of multi-beam sets based on the mapping relationship. A total of beam widths of the plurality of multi-beam sets configured with the mapping relationship with the at least one candidate beam set may be less than or equal to a set beam width.

An electronic device in a communication system according to an embodiment of the present disclosure may comprise a transceiver, at least one processor, and at least one memory operably connectable to the at least one processor and configured to store instructions performing operations based on being executed by the at least one processor, and the operations may comprise all steps of a method according to any one of claims 1 to 7.

A base station (BS) in a communication system according to an embodiment of the present disclosure may comprise a transceiver, at least one processor, and at least one memory operably connectable to the at least one processor and configured to store instructions performing operations based on being executed by the at least one processor, and the operations may comprise all steps of a method according to any one of claims 8 to 14.

A control device controlling an electronic device in a communication system according to an embodiment of the present disclosure may comprise at least one processor, and at least one memory operably connected to the at least one processor and configured to store instructions performing operations based on being executed by the at least one processor, and the operations may comprise all steps of a method according to any one of claims 1 to 7.

A control device controlling a base station (BS) in a communication system according to an embodiment of the present disclosure may comprise at least one processor, and at least one memory operably connected to the at least one processor and configured to store instructions performing operations based on being executed by the at least one processor, and the operations may comprise all steps of a method according to any one of claims 8 to 14.

In one or more non-transitory computer readable mediums storing one or more instructions according to an embodiment of the present disclosure, the one or more instructions may perform operations based on being executed by one or more processors, and the operations may comprise all steps of a method according to any one of claims 1 to 7.

In one or more non-transitory computer readable mediums storing one or more instructions according to an embodiment of the present disclosure, the one or more instructions may perform operations based on being executed by one or more processors, and the operations may comprise all steps of a method according to any one of claims 8 to 14.

### [Advantageous Effects]

The present disclosure can provide a method and device for performing adaptive beamforming in a wireless communication system.

According to the present disclosure, it is possible to perform an access link beam operation in units of beam index on an NCR access link where a TCI framework configured/indicated based on an existing reference signal (RS) identifier (ID) can no longer be applied.

According to the present disclosure, cost-effective application of NCR can be achieved by performing an access link beam operation in units of beam index on an NCR access link.

### [Description of Drawings]

The accompanying drawings, which are included to provide a further understanding of the present disclosure and constitute a part of the detailed description, illustrate embodiments of the present disclosure and serve to explain technical features of the present disclosure together with the description. Technical features of the present disclosure are not limited to specific drawings, and features disclosed in each drawing can be combined with each other to form a new embodiment. Reference numerals in each drawing may denote structural elements.
FIG. 1 illustrates an example of physical channels and general signal transmission used in the 3GPP system.
FIG. 2 illustrates an example of a structure of a radio frame used in NR.
FIG. 3 illustrates an example of a slot structure of an NR frame.
FIG. 4 illustrates an example of a self-contained slot.
FIGS. 5 to 8 illustrate an example of transmission network architecture for 5G.
FIG. 9 illustrates an example of a topology in which an NCR performs transmission and reception between a base station and a UE.
FIG. 10 illustrates an example of a beamforming operation of an existing RF repeater.
FIG. 11 illustrates an example of a beamforming operation of an NCR.
FIG. 12 illustrates an example of an NCR model.
FIG. 13 illustrates an example of a transmit beam direction operated by a gNB and a transmit beam direction operated by an RU in an NCR topology of a single hop between gNB-NCR-UE.
FIG. 14 illustrates an example of a beam index configuration method according to an embodiment of the present disclosure.
FIG. 15 illustrates an example of a beam index configuration method according to another embodiment of the present disclosure.
FIG. 16 illustrates an example of a beam index configuration method according to yet another embodiment of the present disclosure.
FIG. 17 illustrates an example of a mapping relationship between single/multiple beam index(es) and indices in a candidate beam set according to an embodiment of the present disclosure.
FIG. 18 illustrates an example of association between beam indices of a backhaul link and a candidate beam set according to an embodiment of the present disclosure.
FIG. 19 is a flowchart illustrating a signal transmission/reception method according to an embodiment of the present disclosure.
FIG. 20 is a flowchart illustrating a signal transmission/reception method according to another embodiment of the present disclosure.
FIG. 21 illustrates a communication system applied to various embodiments of the present disclosure.
FIG. 22 illustrates wireless devices applicable to various embodiments of the present disclosure.
FIG. 23 illustrates another example of wireless devices applicable to various embodiments of the present disclosure.
FIG. 24 illustrates a signal processing circuit for a transmission signal.
FIG. 25 illustrates an example of a wireless communication device applicable to the present disclosure.

### [Mode for Invention]

In various embodiments of the present disclosure, "A or B" may mean "only A," "only B" or "both A and B." In other words, in various embodiments of the present disclosure, "A or B" may be interpreted as "A and/or B." For example, in various embodiments of the present disclosure, "A, B or C" may mean "only A," "only B," "only C" or "any combination of A, B and C."

A slash (/) or comma used in various embodiments of the present disclosure may mean "and/or." For example, "A/B" may mean "A and/or B." Hence, "A/B" may mean "only A," "only B" or "both A and B." For example, "A, B, C" may mean "A, B, or C."

In various embodiments of the present disclosure, "at least one of A and B" may mean "only A," "only B" or "both A and B." In addition, in various embodiments of the present disclosure, the expression of "at least one of A or B" or "at least one of A and/or B" may be interpreted in the same meaning as "at least one of A and B."

Further, in various embodiments of the present disclosure, "at least one of A, B, and C" may mean "only A," "only B," "only C" or "any combination of A, B and C." In addition, "at least one of A, B or C" or "at least one of A, B and/or C" may mean "at least one of A, B, and C."

Further, parentheses used in various embodiments of the present disclosure may mean "for example." Specifically, when "control information (PDCCH)" is described, "PDCCH" may be proposed as an example of "control information." In other words, "control information" in various embodiments of the present disclosure is not limited to "PDCCH," and "PDDCH" may be proposed as an example of "control information." In addition, even when "control information (i.e., PDCCH)" is described, "PDCCH" may be proposed as an example of "control information."

Technical features described individually in one drawing in various embodiments of the present disclosure may be implemented individually or simultaneously.

The following technologies can be applied to various wireless access systems such as code division multiple access (CDMA), frequency division multiple access (FDMA), time division multiple access (TDMA), orthogonal frequency division multiple access (OFDMA), or single carrier-frequency division multiple access (SC-FDMA). The CDMA may be implemented as radio technology such as Universal Terrestrial Radio Access (UTRA) or CDMA2000. The TDMA may be implemented as radio technology such as a global system for mobile communications (GSM)/general packet radio service (GPRS)/enhanced data rates for GSM evolution (EDGE). The OFDMA may be implemented as radio technology such as Institute of Electrical and Electronics Engineers (IEEE) 802.11 (Wi-Fi), IEEE 802.16 (WiMAX), IEEE 802.20, Evolved UTRA (E-UTRA), or the like. The UTRA is a part of Universal Mobile Telecommunications System (UMTS). 3rd Generation Partnership Project (3GPP) Long Term Evolution (LTE) is a part of Evolved UMTS (E-UMTS) using the E-UTRA and LTE-Advanced (A)/LTE-A pro is an evolved version of the 3GPP LTE. 3GPP NR (New Radio or New Radio Access Technology) is an evolved version of the 3GPP LTE/LTE-A/LTE-A pro.

For clarity of description, the technical spirit of the present disclosure is described based on the 3GPP communication system (e.g., LTE or NR etc), but the technical spirit of the disclosure is not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The 3GPP 6G may mean technology after TS Release 17 and/or Release 18. "xxx" denotes a detailed standard document number. The LTE/NR/6G may be collectively referred to as the 3GPP system. For background art, terms, abbreviations, etc. used in the present disclosure, reference can be made to items described in standard documents published prior to the present disclosure. For example, the following document may be referred to.

### 3GPP LTE

- 36.101: User Equipment (UE) radio transmission and reception
- 36.211: Physical channels and modulation
- 36.212: Multiplexing and channel coding
- 36.213: Physical layer procedures
- 36.214: Physical layer Measurements
- 36.321: Medium Access Control (MAC) protocol specification
- 36.331: Radio Resource Control (RRC)
- 37.213: Physical layer procedures for shared spectrum channel access

### 3GPP NR

- 38.101-1: Part 1: Range 1 Standalone
- 38.101-2: Part 2: Range 2 Standalone
- 38.101-2: Part 3: Range 1 and Range 2 Interworking operation with other radios
- 38.211: Physical channels and modulation
- 38.212: Multiplexing and channel coding
- 38.213: Physical layer procedures
- 38.214: Physical layer Measurements
- 38.215: Physical layer measurements
- 38.321: Medium Access Control (MAC) protocol specification
- 38.331: Radio Resource Control (RRC)

For the purpose of explaining the present disclosure, terms not defined above are as follows.

IAB-node: RAN node that supports wireless access to UEs and wirelessly backhauls the access traffic.

IAB-donor: RAN node that provides UE's interface to core network and wireless backhauling functionality to IAB nodes.

Abbreviations used in the present disclosure may be defined as follows.
IAB: Integrated Access and Backhaul
CSI-RS: Channel State Information Reference Signal
DgNB: Donor gNB
AC: Access
BH: Backhaul
FH: Fronthaul
CU: Centralized Unit
DU: Distributed Unit
RU: Remote Unit
MT: Mobile terminal
CU: Centralized Unit
IAB-MT: IAB mobile terminal
NGC: Next-Generation Core network
SA: Stand-alone
NSA: non-stand-alone
EPC: Evolved Packet Core

### Physical Channel and Frame Structure

### Physical Channel and General Signal Transmission

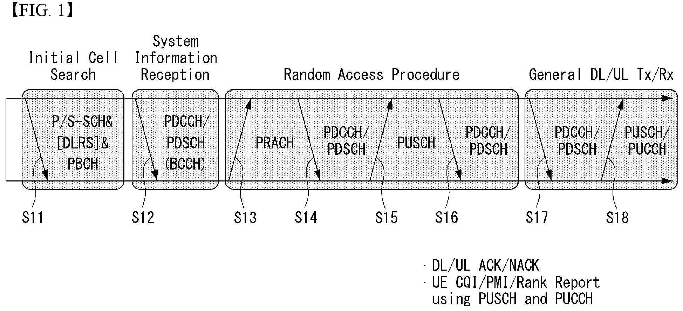

FIG. 1 illustrates an example of physical channels and general signal transmission used in the 3GPP system.

In a wireless communication system, the UE receives information from the eNB through downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S11). To this end, the UE may receive a primary synchronization signal (PSS) and a (secondary synchronization signal (SSS) from the eNB and synchronize with the eNB and acquire information such as a cell ID or the like. Thereafter, the UE may receive a physical broadcast channel (PBCH) from the eNB and acquire in-cell broadcast information. The UE receives a downlink reference signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S12).

When there is no radio resource first accessing the eNB or for signal transmission, the UE may perform a Random Access Procedure (RACH) to the eNB (S13 to S16). To this end, the UE may transmit a specific sequence to a preamble through a Physical Random Access Channel (PRACH) (S13 and S15) and receive a response message (Random Access Response (RAR) message) for the preamble through the PDCCH and a corresponding PDSCH. In the case of a contention based RACH, a Contention Resolution Procedure may be additionally performed (S16).

The UE that performs the above procedure may then perform PDCCH/PDSCH reception (S17) and Physical Uplink Shared Channel (PUSCH)/Physical Uplink Control Channel (PUCCH) transmission (S18) as a general uplink/downlink signal transmission procedure. Control information that the UE transmits to the base station may be referred to as uplink control information (UCI). The UCI may include hybrid automatic repeat and request (HARQ) acknowledgement/negative ACK (ACK/NACK), scheduling request (SR), channel state information (CSI), etc. The CSI may include a channel quality indication (CQI), a precoding matrix indicator (PMI), a rank indicator (RI), etc. The UCI may be generally transmitted on the PUCCH, but if control information and data need to be transmitted at the same time, the UCI may be transmitted on the PUSCH. The UE may aperiodically transmit the UCI to the base station on the PUSCH based on a request/indication of the network.

New radio access technology (new RAT, NR) is described below.

As more and more communication devices require larger communication capacity, there is a need for enhanced mobile broadband communication compared to the existing radio access technology (RAT). Massive machine type communications (MTC) which provide various services anytime and anywhere by connecting many devices and objects are also one of the major issues to be considered in next-generation communications. In addition, a communication system design considering a service/UE sensitive to reliability and latency is also being discussed. As above, the introduction of next generation RAT considering enhanced mobile broadband communication, massive MTC, ultra-reliable and low latency communication (URLLC), etc. is discussed, and the technology is called new RAT or NR for convenience in various embodiments of the present disclosure.

### Orthogonal Frequency Division Multiplexing (OFDM) Numerology

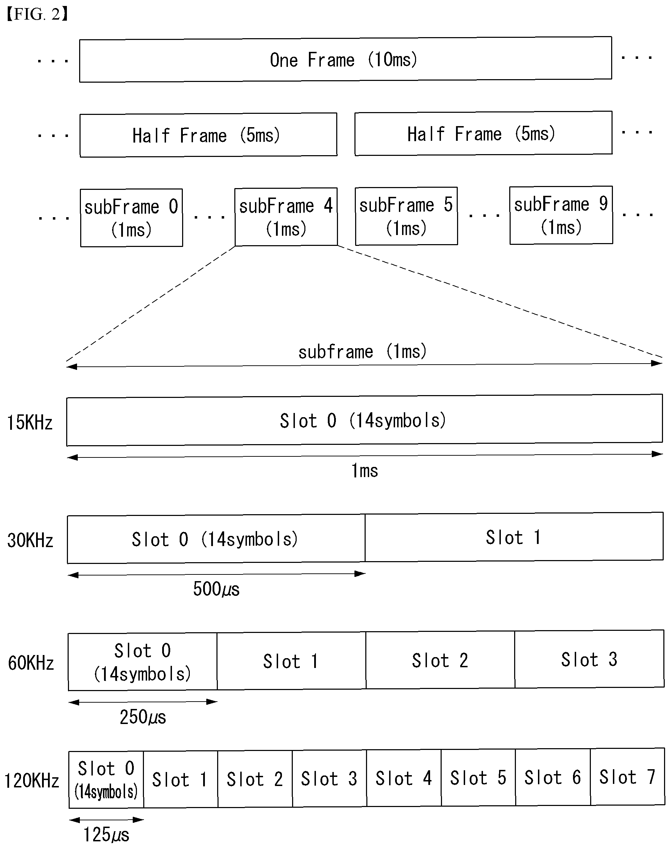

FIG. 2 illustrates an example of a structure of a radio frame used in NR.

A new radio access technology (RAT) system uses an OFDM transmission scheme or a similar transmission scheme thereto. The new RAT system may follow different OFDM parameters from OFDM parameters of LTE. Alternatively, the new RAT system may follow numerology of existing LTE/LTE-A as it is but have a larger system bandwidth (e.g., 100 MHz). Alternatively, one cell may support a plurality of numerologies. In other words, UEs that operate with different numerologies may coexist in one cell.

Referring to FIG. 2, in NR, uplink and downlink transmission consists of frames. A radio frame has a length of 10 ms and is defined as two 5 ms half-frames (HFs). The half-frame is defined as five 1 ms subframes (SFs). The subframe is split into one or more slots, and the number of slots in the subframe depends on a subcarrier spacing (SCS). Each slot includes 12 or 14 OFDM(A) symbols depending on a cyclic prefix (CP). When a normal CP is used, each slot includes 14 symbols. When an extended CP is used, each slot includes 12 symbols. The symbol may include an OFDM symbol (or CP-OFDM symbol) and an SC-FDMA symbol (or DFT-s-OFDM symbol).

Table 1 shows that when the normal CP is used, the number of symbols per slot, the number of slots per frame, and the number of slots per subframe vary depending on the SCS.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

In Table 1, N^{slot}_{symb} is the number of symbols in the slot, N^{frame,u}ₛₗₒₜ is the number of slots in the frame, and N^{subframe,u}ₛₗₒₜ is the number of slots in the subframe.

Table 2 shows that when the extended CP is used, the number of symbols per slot, the number of slots per frame, and the number of slots per subframe vary depending on the SCS.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

NR supports multiple numerologies (or subcarrier spacing (SCS)) for supporting diverse 5^{th} generation (5G) services. For example, if the SCS is 15 kHz, the NR supports a wide area in conventional cellular bands; if the SCS is 30 kHz/60 kHz, the NR supports a dense-urban, lower latency and wider carrier bandwidth; and if the SCS is 60 kHz or higher, the NR supports a bandwidth greater than 24.25 GHz in order to overcome phase noise.

An NR frequency band may be defined as two types of frequency ranges FR1 and FR2. Values of frequency ranges may be changed. For example, the two types of frequency ranges FR1 and FR2 may be defined as in Table 3 below.

**[Table 3]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

For convenience of explanation, FR1 among the frequency ranges used in the NR system may mean "sub 6 GHz range", and FR2 may mean "above 6 GHz range" and may call millimeter wave (mmW).

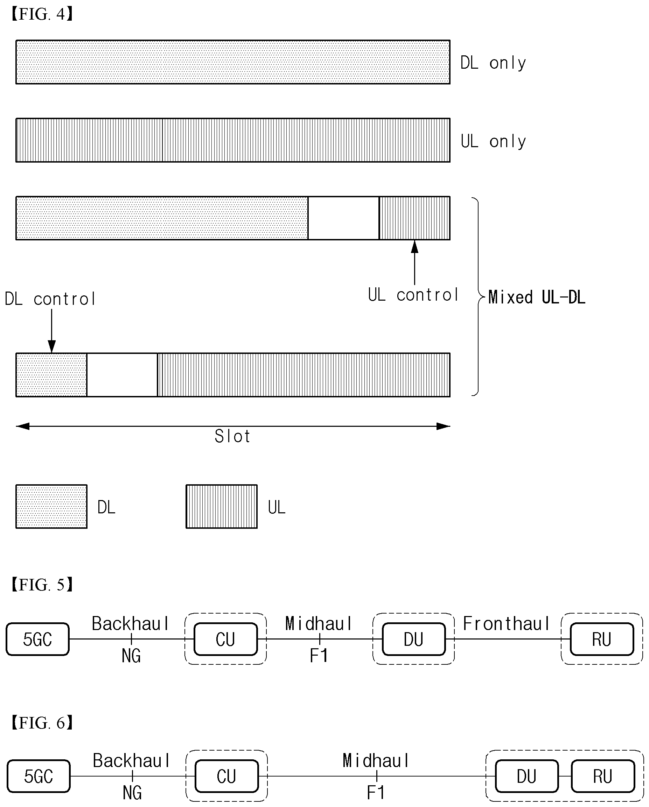

As described above, values of the frequency range of the NR system may be changed. For example, FR1 may include a range of 410 MHz to 7125 MHz as shown in FIG. 4 below.

**[Table 4]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Referring to FIG. 4, FR1 may include a frequency band of 6 GHz (or 5850, 5900, 5925 MHz, etc.) or higher. For example, the frequency band of 6 GHz (or 5850, 5900, 5925 MHz, etc.) or higher included in FR1 may include an unlicensed band. The unlicensed band may be used for diverse purposes, for example, used for communication for vehicles (e.g., self-driving).

In the NR system, OFDM(A) numerology (e.g., SCS, CP length, etc.) may be differently configured between a plurality of cells merged into one UE. Hence, an (absolute time) duration of a time resource (e.g., subframe (SF), slot or transmission time interval (TTI)) (for convenience, collectively referred to as a time unit (TU)) consisting of the same number of symbols may be configured differently between the merged cells.

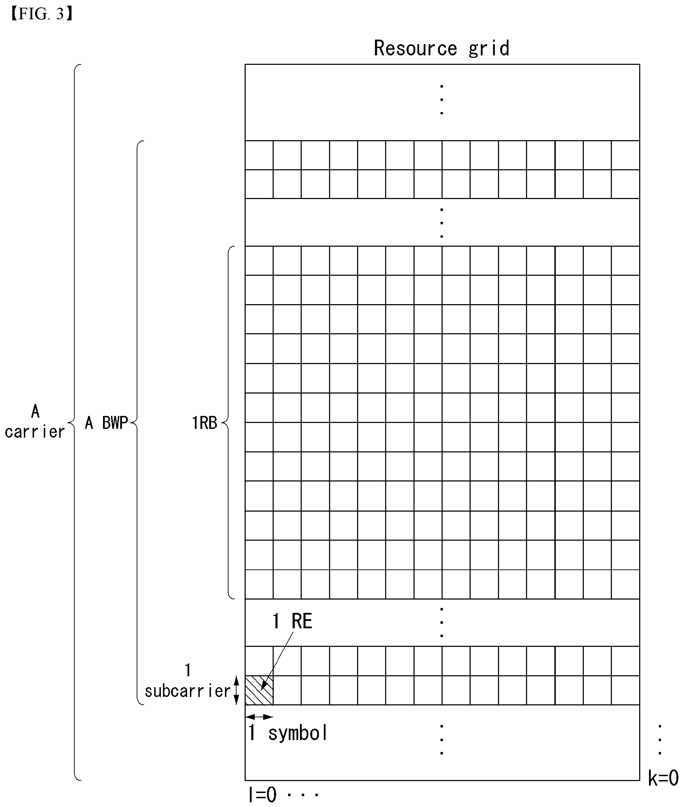

FIG. 3 illustrates an example of a slot structure of an NR frame.

Referring to FIG. 3, a slot includes a plurality of symbols in a time domain. For example, one slot includes seven symbols in a normal CP, while one slot includes six symbols in an extended CP. A carrier includes a plurality of subcarriers in a frequency domain. A resource block (RB) is defined as a plurality of (e.g., 12) consecutive subcarriers in the frequency domain. A bandwidth part (BWP) is defined as a plurality of consecutive (P)RBs in the frequency domain and may correspond to one numerology (e.g., SCS, CP length, etc.). The carrier may include up to N (e.g., five) BWPs. The data communication may be performed through an activated BWP, and only one BWP may be activated in one UE. In a resource grid, each element is referred to as a resource element (RE), and one complex symbol may be mapped to each RE.

FIG. 4 illustrates an example of a self-contained slot.

In the NR system, a frame is characterized by a self-contained structure in which all of a DL control channel, DL or UL data, and an UL control channel can be included in one slot. For example, the first N symbols in the slot may be used to transmit the DL control channel (hereinafter, referred to as a DL control region), and the last M symbols in the slot may be used to transmit the UL control channel (hereinafter, referred to as an UL control region), where N and M are an integer greater than or equal to 0. A resource region (hereinafter, referred to as a data region) between the DL control region and the UL control region may be used for DL data transmission or UL data transmission. For example, the following configuration may be considered. Each duration is listed in chronological order.
1. DL only configuration
2. UL only configuration
3. Mixed UL-DL configuration
   - DL region + Guard Period (GP) + UL control region
   - DL control region + GP + UL region
      * DL region: (i) DL data region, (ii) DL control region + DL data region
      * UL region: (i) UL data region, (ii) UL data region + UL control region

The PDCCH may be transmitted in the DL control region, and the PDSCH may be transmitted in the DL data region. The PUCCH may be transmitted in the UL control region, and the PUSCH may be transmitted in the UL data region. On the PDCCH, downlink control information (DCI), for example, DL data scheduling information, UL data scheduling information, etc., may be transmitted. On the PUCCH, uplink control information (UCI), for example, positive acknowledgement/negative acknowledgement (ACK/NACK) information, channel state information (CSI), scheduling request (SR), etc., for DL data may be transmitted. The GP provides a time gap in a process of switching the base station and the UE from a transmission mode to a reception mode or a process of switching from the reception mode to the transmission mode. Some symbols at time at which DL is switched to UL in the subframe may be configured as the GP.

FIGS. 5 to 8 illustrate an example of transmission network architecture for 5G.

Referring to FIG. 5, ITU-T (Telecommunication Standardization Sector) has adopted slightly different 5G transmission network architecture consisting of three logical elements of a control unit (CU), a distributed unit (DU) and a radio unit (RU). In this model, functions of a midlayer and a lower layer are split as the DU and the RU. Based on the functional split between the DU and the RU, the RU implements a radio frequency (RF) functionality, and if possible, also implements a low-PHY functionality and a high-PHY functionality.

Referring to FIGS. 6 to 8, CUs, DUs, and RUs may be grouped in different combinations to form actual physical network elements based on network requirements. This may provide flexibility to accommodate various network architectures, applications, and transmission network requirements.

As illustrated in FIGS. 5 to 8, a transmission network between the 5th generation core network (5GC) and the CU is referred to as backhaul, and a backhaul network implements a 3GPP next generation (NG) interface. In the same manner, a transmission network between the CU and the DU is referred to as midhaul, and a midhaul network implements a 3GPP F1 interface. Finally, a transmission network between the DU and the RU is referred to as fronthaul. The backhaul, the midhaul, and the fronthaul are generally referred to as xhaul.

### Reconfigurable Intelligent Surface (RIS)

An RIS may be used to control the propagation of electromagnetic waves by changing electrical and magnetic properties of the electromagnetic waves on the surface. The RIS is also known as an intelligent reflecting surface (IRS) and a large intelligent surface (LIS) and may have a programmable structure. The RIS may be used to sense a wireless environment by integrating sensing functions, in addition to controlling the propagation of the electromagnetic waves. The properties of wireless channels can be controlled at least partially by deploying the RIS in an environment in which a wireless system operates.

The functionality of the RIS can provide many advantages, including the possibility of improving stability and coverage performance through beamforming or range extension. The ability to control a propagation environment has somewhat changed the existing wireless system design paradigm in which wireless channels were always considered as uncontrollable entities that distorted the transmitted signal. Thus, a transmitter (TX) and a receiver (RX) have been traditionally designed to equalize an effect of the channel. There are various expected scenarios, for example, a single RIS being deployed on a wall to indicate a signal coming from a predetermined direction.

The use of the RIS can provide a 'transmission effect' of a gNB signal that allows external signal to be transmitted into the building, and a coverage for a shaded area can be improved by providing a 'reflection effect' of an NLoS environment.

### Network-Controlled Repeater (NCR) of NR

### Existing RF Repeater

An RF repeater is a non-regenerative relay node that simply amplifies and forwards everything it receives. The main advantages of the RF repeaters are their low cost, ease of deployment, and not increasing latency. The main disadvantage of the RF repeaters is that they can amplify signals and noise to contribute to an increase in interference (contamination) of the system.

### Release (Rel)-17 Work Item (WI) of RF Repeater (RAN4)

The RF repeater is specified in Rel-17 of RAN4 for a frequency range 1 (FR1) frequency division duplex (FDD)/time division duplex (TDD) and a frequency range 2 (FR2) band. The Rel-17 WID contains only RF requirements. The RAN4 work item description (WID) (RP-210818) specifies that it is assumed that the RF repeater does not perform adaptive beamforming toward a UE.

### NCR for Rel-18 NR

Coverage is a basic aspect of cellular network deployment. When deployed, mobile operators rely on various types of network nodes to provide blanket coverage. The deployment of regular full-stack cells is one option but is not always possible (e.g., without backhaul availability) or is not always economically viable.

As a result, a new type of network node has been considered to increase the network deployment flexibility of the mobile operator. For example, integrated access and backhaul (IAB) has been introduced in Rel-16 and enhanced in Rel-17 to a new type of network node that does not require wired backhaul. Another type of network node is an RF repeater that simply amplifies and forwards all signals it receives. The RF repeaters have been widely deployed to complement the coverage provided by regular full-stack cells in 2G, 3G and 4G. In Rel-17, RAN4 has specified RF and electromagnetic compatibility (EMC) requirements for RF repeaters for NR targeting both FR1 and FR2.

The RF repeaters provide a cost-effective means of extending network coverage. However, the RF repeaters have limitations in simply performing amplification and forwarding operations without considering various factors that can improve performance. These factors may include information on semi-static and/or dynamic downlink/uplink configurations, adaptive transmitter/receiver spatial beamforming, ON-OFF states, and the like.

Compared to the existing RF repeater, the NCR improves a function of receiving and processing side control information. The side control information enables a network control repeater to perform amplification and forwarding operations in a more efficient manner. Potential advantages may include mitigation of unnecessary noise amplification, better spatial directivity transmission and reception, and simplified network integration.

The study of NCR for NR focuses on the following scenarios and assumptions. The NCR is an in-band RF repeater used to extend a network range in the FR1 and FR2 bands, and the FR2 deployment during the study may be prioritized for both outdoor and outdoor to indoor (O2I) scenarios. It corresponds only to a single hop stationary NCR. The NCR is transparent to the UE. The NCR may simultaneously maintain a gNodeB (gNB)-repeater link and a repeater-UE link. Here, cost efficiency is a key consideration for the NCR.

In RAN1, there is a study and identification of whether the following side control information, including a maximum transmission power assumption, is needed for the NCR. That is, there is a study and identification of whether side control information such as beamforming information, timing information for aligning transmission/reception boundaries of the NCR, uplink-downlink TDD configuration information, On-Off information for efficient interference management and energy efficiency enhancement, and power control information (as a second priority) for efficient interference management is needed for the NCR. In addition, the RAN1 has a study and identification of L1/L2 (layer 1/layer 2) signal (including configuration of L1/L2) for transmitting the side control information. RAN2 and RAN3 have a study on identification and authentication of the NCR. Here, coordination with SA3 may be necessary. The network-controlled repeater (NCR) may consist of an RU and an MT.

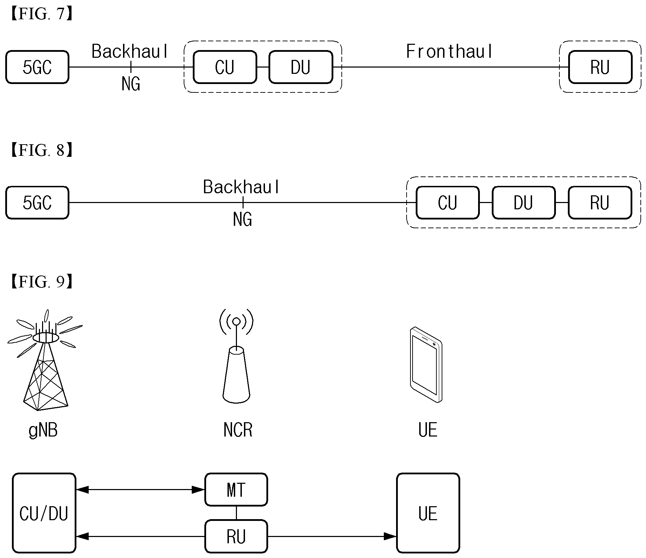

FIG. 9 illustrates an example of a topology in which an NCR performs transmission and reception between gNB and a UE.

In FIG. 9, the gNB may include a CU and/or a DU, and the NCR may be connected to the gNB. The NCR may consist of a mobile terminal (MT) and an RU.

The RU may consist of only an RF layer. The RU may receive a signal sent by the gNB at an RF end and transmit the signal to the UE, and the RU may receive a signal sent by the UE at the RF end and transmit the signal to the gNB. The RU only transmits the signal between the gNB and the UE, but cannot itself generate signal/channel and transmit it to the gNB/UE or receive signal/channel from the gNB/UE and search for it. The RU may consider adjusting the transmit/receive beam direction, downlink/uplink direction, whether it is On/Off, transmit power, etc., at the RF end, in order to transmit the received signal. However, such an operation of the RU cannot be determined by the NCR itself, and may be entirely controlled by the gNB.

The MT may include an RF layer and L1, L2 and/or L3 layers. For example, the MT may include the RF layer and the L1 layer or the L1/L2 layer, or the MT may include the RF layer and the L1/L1/L3 layer. The MT may search/receive the signal/channel transmitted by the gNB, and the MT may generate and transmit the signal/channel transmitted to the gNB. The MT may receive information (i.e., side control information) required to control an operation of the RU from the gNB. The MT does not perform transmission/reception with the UE.

When compared to the existing RF repeater, the NCR can operate as follows.

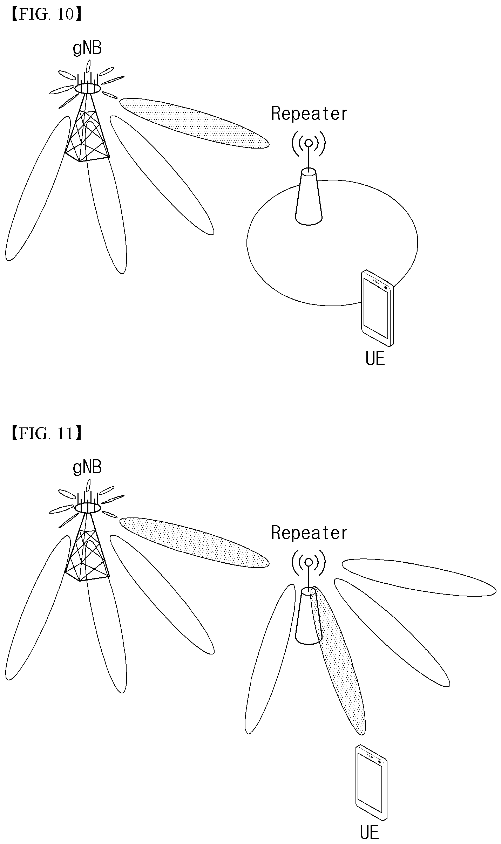

FIG. 10 illustrates an example of a beamforming operation of an existing RF repeater. FIG. 11 illustrates an example of a beamforming operation of an NCR.

Referring to FIGS. 10 and 11, the existing RF repeater performs beamforming applying an omni-direction or a fixed direction, as illustrated in FIG. 10. On the other hand, the NCR can obtain a beamforming gain by adaptively adjusting a transmit/receive beam direction of the NCR based on a location of the UE and channel conditions of the UE, as illustrated in FIG. 11.

The existing RF repeater cannot distinguish downlink and uplink directions in a TDD system and always performed simultaneously transmission and reception in the downlink direction and the uplink direction. Alternatively, the existing RF repeater applies only a fixed TDD configuration to perform switching between the downlink direction and the uplink direction in a given time pattern. On the other hand, the NCR may perform downlink/uplink switching in consideration of the TDD configuration. Hence, this enables adaptive downlink/uplink operation and can reduce power waste and interference caused by transmitting unnecessary signals.

The existing RF repeater always amplifies and forwards the power of a received signal regardless of whether the gNB and the UE transmit signals. Hence, this unnecessarily wastes the power and increases the interference to the surroundings. The NCR may perform the On/Off operation to turn off the operation of the RU when there is no signal to transmit to the gNB/UE, thereby not transmitting unnecessary signals.

The existing RF repeater amplified and forwarded the power of the received signal at a fixed ratio. On the other hand, an influence of interference on the surroundings can be reduced by reducing the transmission power of the NCR when the signal is transmitted with unnecessarily large power, thereby reducing, and the signal can be stably transmitted to the receiver by increasing the transmission power of NCR when the signal is transmitted with low power.

The existing RF repeater operates without knowing downlink/uplink slot boundaries. On the other hand, the NCR shall know transmission/reception boundaries of the downlink and uplink in order to adaptively adjust the beamforming, the on/off, the downlink/uplink direction, the transmission power, etc. as described above. Through this, the NCR can differently apply the operation of the RU per unit time (e.g., slot or symbol).

Based on this discussion, the present disclosure proposes a method of determining and configuring/indicating a transmit/receive beam index required to perform adaptive beamforming on a link between the RU of the NCR and the UE.

The present disclosure assumes an operation in the NCR. However, the present disclosure can also be applied to equipment/device not the NCR. In particular, the contents of the present disclosure can be applied for the operation of the RIS. To this end, the NCR mentioned in the present disclosure can be replaced by the RIS and extended/interpreted. In this case, the RU may perform a role of transmitting a signal from the gNB to the UE and a role of transmitting the signal from the UE to the gNB in the RIS, and the MT may perform a role of receiving side control information for controlling signal transmission of the RU from the gNB.

In the present disclosure, the network may be interpreted as being replaced by the gNB or the CU/DU. The gNB may also be interpreted as being replaced by the network or the CU/DU.

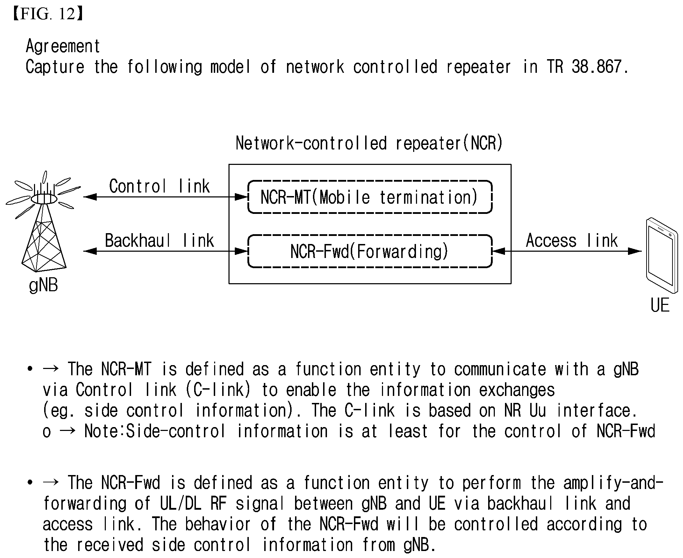

FIG. 12 illustrates an example of an NCR model.

At the RAN1#109-e standardization meeting, it was agreed that modeling and terminology for the NCR were partially newly defined and inserted into TR 38.867 as illustrated in FIG. 12.

In particular, an NCR-RU, which has been represented as the RU of the NCR in the SID (study in description), was agreed by changing the term to NCR-Fwd in the process of the RAN1#109-e standardization meeting. Therefore, in the present disclosure, the RU may be interpreted by replacing the existing NCR-RU and the agreed NCR-Fwd. In addition, according to the agreement, in the present disclosure, links of the gNB and an NCR-MT may be defined and interpreted as a control link or a c-link, links of the gNB and the NCR-Fwd may be defined and interpreted as a backhaul link, and links of the NCR-FWd and the UE may be defined and interpreted as an access link.

The NCR can control the more intelligent operation of the RU beyond the limitations of the simple signal amplification and forwarding of the existing repeater. To this end, the operation of the RU can be controlled by newly introducing the MT and transmitting and receiving side control information between the gNB and the MT. Hence, compared to the existing repeater, the NCR can perform adaptive beamforming on an RU-UE link using the side control information. However, as the cost-effectiveness of the NCR emerges as an important factor, it may be difficult for the MT to have full control capabilities like the gNB.

In other words, the NCR shall follow the gNB's decision to perform transmission and reception adaptive beamforming of the RU on the installed RU-UE link. More specifically, both a direction of a transmit beam applied by the RU when the RU forwards a signal received from the gNB to the UE and a direction of a receive beam applied by the RU when the RU forwards a signal received from the UE to the gNB may be determined by the gNB, and information about which transmit/receive beam the RU will actually apply may be provided, as side control information, to the MT from the gNB.

The NCR may consider controlling the transmit/receive beam direction, the downlink/uplink direction, whether it is on/off, the transmission power, etc. at the RF end so as to forward the signal received by the RU. However, the operation of the RU cannot be determined by the NCR itself and can be entirely controlled by the gNB. To this end, the MT may receive information (i.e., side control information) required to control the operation of the RU from the gNB. The side control information may be transmitted via L1/L2 signaling such as an MAC-control element (CE) and downlink control indicator (DCI).

For example, the side control information may include all or some of the following information.
1) Beamforming information
   → Information on transmit/receive beam directions of RU
   → This information may include beam directions for uplink transmission to the gNB, downlink reception from the gNB, downlink transmission to the UE, and/or uplink reception from the UE.
2) Timing information to align transmission/reception boundaries of network-controlled repeater (NCR)
   → Information for RU to align transmission/reception slots or boundaries
3) Information on uplink-downlink TDD configuration
   → Information on downlink/uplink directions of RU
4) ON-OFF information for efficient interference management and improved energy efficiency
   → Information on ON-OFF operation of RU
5) Power control information for efficient interference management)
   → Information on transmission power of RU
   → This information may include uplink transmission power to gNB and/or downlink transmission power to UE.

In this case, it is necessary to define which beam direction or index of the actual RU the beamforming information received by the MT via the side control information indicates. The side control information of the MT may be used to indicate directions of transmit and receive beams of the RU in performing the adaptive beamforming on the RU-UE link. The present disclosure proposes a method of determining which beam the side control information indicates in the access link transmission/reception of the RU.

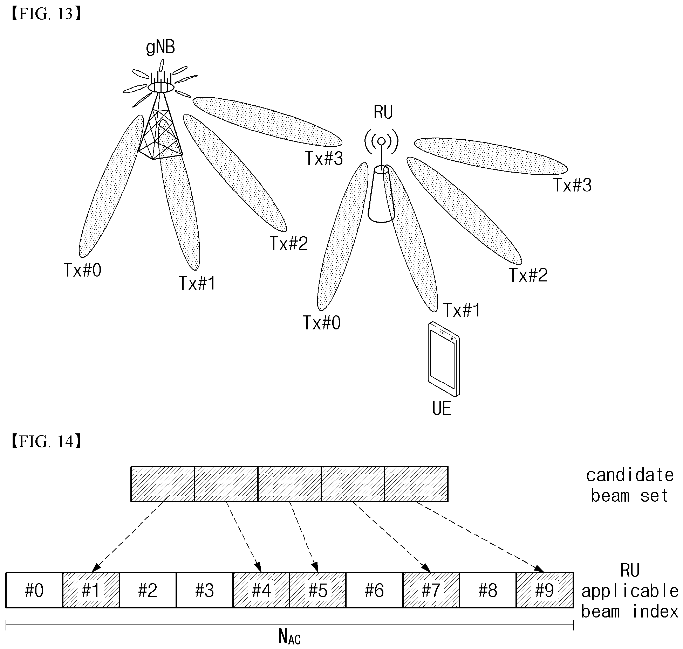

FIG. 13 illustrates an example of a transmit beam direction operated by a gNB and a transmit beam direction operated by an RU in an NCR topology of a single hop between gNB-NCR-UE.

Referring to FIG. 13, a gNB may operate four transmit beams (N_{FH} = 4), and an RU may operate four transmit beams (N_{AC} = 4). In FIG. 13, the RU receives a downlink signal from the gNB using a transmit beam Tx#3 of the gNB, and a UE receives a downlink signal from the RU using a transmit beam Tx#1 of the RU.

A beam pair of gNB-MT link and/or gNB-RU link may be fixed and configured in an implementation step, or may be determined through a beam adaptation operation between the gNB and the MT. In this case, an example of a procedure related to a method of determining and transmitting a transmit/receive beam of the RU for RU-UE link is as follows.

First step: Information on the number of transmit/receive beams (N_{AC}) of the RU is reported to the gNB. In this case, a value of the N_{AC} is reported by the MT to the gNB.

Second step: The gNB determines and indicates beam index information to be actually transmitted and received by the RU. The MT receives the information from the gNB as side control information.

Third step: Transmission and reception are performed by applying a beam direction of the RU based on the indicated information.

The adaptive beamforming may be possible by the MT assisting the control of the gNB with the side control information, but in this case, there is no determination as to whether the transmit/receive beam indices should be indicated. Therefore, the present disclosure proposes, in the above procedure, a method of determining an RU transmit/receive beam index of an RU-UE link and a method of indicating an actual transmit/receive beam index of an RU. When the NCR has a multiple antenna array configuration based on the performance of the NCR, a multi-beam operation/transmission and reception that are simultaneously transmitted to an access link of the NCR through a plurality of beam indices can be expected. The multi-beam operation/transmission and reception may mean that the RU performs downlink transmission and uplink reception by using all the multi-beams at a certain time at once on the access link.

Therefore, the present disclosure proposes, when an NCR considers a situation in which multi-beam is transmitted and received on an access link of an RU, a method of reporting capability information of the NCR related to it (i.e., the number of beam indices of the access link, a beam type of each beam index of the access link, and/or multi-beam combination of the access link), and a method of indicating multi-beam transmission and reception on an access link of the RU based on the corresponding information. In the present disclosure, the access link refers to a transmission and reception link between the RU and the UE.

Additional advantages, objects, and features of the present disclosure will be set forth in part in the following description and in part will become apparent to those skilled in the art upon examination of the following or can be learned from embodiments of the present disclosure. Objects and other advantages of the present disclosure may be realized and attained by the structures particularly pointed out in the disclosed description and the claims, as well as in the accompanying drawings.

The configurations, operations, and other features of the present disclosure will be understood by embodiments of the present disclosure described with reference to the accompanying drawings.

### Method of reporting transmit/receive beam information of RU to gNB on access link

A gNB needs to know information on transmit/receive beam indices of an RU to control adaptive beamforming of an access link. The information on beam indices may include information on a direction of beam for each beam index and/or the number of beams (N_{AC}) supported by the RU. In this case, the information on the transmit/receive beam direction of the RU for each beam index may be processed by configuration or OAM (Operations, Administration, and Maintenance) configuration of the NCR. The number of transmit/receive beam indices (N_{AC}) of the RU may be assumed to be known by the gnB due to implementation in an NCR installation step. Otherwise, an operation for the MT to report a value of the N_{AC} to the gNB may be necessary so that the gNB determines the number of beams supported by the RU. To this end, it is proposed that the MT reports the information on the number of beams (N_{AC}) supported by the RU to the gNB. More specifically, the information on the number of beams (N_{AC}) can be reported through a method including RRC signaling, MAC-CE, or UCI of PUCCH.
Method 1: Reporting information including a value of N_{AC} via RRC signaling
Method 2: The MT reports information to the gNB by including a value of N_{AC} in MAC-CE. A logical channel identifier (LCID) that the MT can report (e.g., an existing recyclable LCID or a new LCID for NCR) is configured through RRC parameter definition (e.g., NumOfCandidateBeamIndex-NCR) for NCR operation, and then rgw information is reported to the gNB by including a value of N_{AC} in a payload of an MAC-CE field.
Method 3: The MT reports information to the gNB by including a value of N_{AC} in an UCI field on PUCCH. There is an advantage that the setting of separate higher layer parameters may not be used, and the MT with capability limitations can dynamically report in terms of cost-effectiveness. For example, the method 3 can be effective when information on the number of transmit/receive beam indices of the RU may be changed over time, such as when it is frequently reset due to the instability of channel between the gNB and the NCR.

In this case, the MT may report the number of beams (N_{AC}) supported by the RU to the gNB independently of the number of beams for downlink transmission and the number of beams for uplink reception.

In addition, when the NCR consists of multiple antenna array configurations, the MT may report the capability of the NCR for multi-beam transmission and reception of the access link to the gNB. In this case, the capability of the NCR may include the following information, including the number of beams (N_{AC}) supported by the RU for the access link.

NCR capability for multiple beam DL transmission/UL reception at NCR-RU
1. Number of access link beam indices (N_{AC})
2. Beam type of each beam index
   → Angle of beam width for each beam index (e.g., 0, 1, 2, 3)
3. Information of access link multi-beam
   → Multi-beam set/combination of beam indices

In particular, the RU performing only a simple amplification-and-forward relay cannot make its own decision/determination. Therefore, in order to perform multi-beam transmission and reception in the RU, the MT needs to report information on multi-beam available for the RU to the gNB. The report method may include a method of including information on multi-beam in RRC signaling/MAC-CE signaling or UCI field of PUCCH as in the methods 1 to 3 above. It may be assumed that the number of beam indexes (No. 1) of the access link is equal to the number of applicable beam indices (N_{AC}) of the RU used for single beam transmission and reception of the methods proposed above. In order for the RU to perform multi-beam transmission and reception of the access link, the MT shall appropriately select a plurality of beam indices and report it to the gNB so that there is no problem in beamforming between multi-beam indices used simultaneously at a specific time. More specifically, because a beam width used for each beam index may be different when configuring multi-beam, multi-beam combination shall be configured within a range where there is no problem in transmission. To this end, beam type information (No. 2) and configurable multi-beam information (No. 3) may be reported for each of the N_{AC} beam indices. In particular, because a beam width that multi-beams can physically beamform at once at a specific time will be limited, information may be needed as to whether a beam type for each beam index is a narrow beam or a wide beam. For example, it is difficult for beam indices with a beam type of a wide beam to form a multi-beam with a combination of multiple beam indices, but beam indices with a beam type of a narrow beam are more likely to form a multi-beam with a combination of multiple beam indices. From this perspective, the beam type may be expressed by quantifying the degree of the beam width. For example, 1 bit of information may be expressed in two steps including the narrow beam of 0 and the wide beam of 1. By further dividing the beam width, in 2 bits of information, the narrowest beam may be expressed as 0 and the widest beam may be expressed as 3, so that the beam width can be expressed in steps from 0 to 3.

As described above, when there is beam type information for each beam index, information (No. 3) related to a plurality of multi-beams may be configured for multi-beam transmission and reception. In this case, configuration information may include a multi-beam combination and/or a total number of multi-beams. Here, the multi-beam combination may refer to a configuration of a plurality of beam indices capable of multi-beam transmission and reception in consideration of beam type (i.e., beam width) information for each beam index for N_{AC} access link beam indices. The combination of the multiple beam indices may be defined as a multi-beam set. In addition, a total number of multi-beams (Lₘₐₓ) may refer to a maximum number of multiple beam indices that the NCR may configure as the multi-beam set. In this case, the MT may calculate the total number of multi-beams (Lₘₐₓ) by reflecting a weight of the beam type for each beam index. In this case, the beam type of each of the beam indices constituting the multi-beam set may have to be the narrow beam in order that no problem occurs when the RU performs the multi-beam transmission and reception on the access link. Alternatively, for a low-cost NCR that may have a limitation of implementation, the MT may calculate the total number of multi-beams (Lₘₐₓ) with only the maximum number of combinable beam indices without considering the beam type for each beam index. The MT may list the multi-beam set available for the RU in consideration of the multi-beam set and/or the total number of multi-beams (Lₘₐₓ). And, the MT may report list information on the multi-beam set to the gNB. In this way, information that the MT determines the multi-beam set and/or the total number of multi-beams (Lₘₐₓ) capable of the multi-beam transmission and reception of the RU and configures as a list of the multi-beam set may be referred to as access link multi-beam information (No. 3).

For example, if the number of transmit/receive beam indices (N_{AC}) of the RU is 6 (N_{AC}=6) and each beam index is beam#0, 1, ..., 5, the beam type for each beam index may include a narrow beam width of 1 to a widest beam width of 4 and may be expressed in the form of beam#0=1, beam#1=1, beam#2=2, beam#3=2, beam#4=3, and beam#5=3. The MT may configure, as a list, the multi-beam set consisting of a combination of multiple beam indices capable of performing multi-beam transmission and reception based on the beam information of the RU. As described above, the multi-beam set can be configured within a range where no problem occurs when transmitting and receiving the multi-beam, that is, within a limit where beamforming is physically possible. Assuming that the total number of multi-beams (i.e., total beam width) that can transmit and receive the multi-beam without any problem in the access link of the RU is 4 based on the above example, the possible multi-beam set is a multi-beam set in which {beam#0, beam#1}, {beam#0, beam#2}, {beam#0, beam#4}, {beam#0, beam#1, beam#2}, etc. can normally transmit and receive the multi-beam. On the other hand, combinations of {beam#2, beam#4} and {beam#4, beam#5} cannot be used in a list of multi-beam set exceeding the total number of multi-beams (Lmax) in the beam width.

As described above, the combinations of the beam indices that appropriately consider the beam type may be included in the capability of the NCR and reported as the multi-beam set list that can normally expect the multi-beam transmission and reception. In this case, the number of the multi-beam sets that can be configured as the list may not be limited, but the number of the multi-beam sets that can be configured as the list may be limited by the number of transmit/receive beam indices (N_{AC}), etc. depending on the performance of the NCR. This can be configured based on the implementation of the NCR.

### Method of indicating actual transmit/receive beam of RU on access link

Based on the transmit/receive beam information of the RU reported with the above-described side control information, the gNB may determine, configure, and indicate beam indices to be used by the RU for actual transmission/reception. When the number of transmit/receive candidate beam indices (N_{AC}) is not large and thus dynamic indication is possible, and when the number of transmit/receive beam indices (N_{AC}) is large enough to generate an indication overhead, the present disclosure may propose a method where the gNB determines, configures, and indicates the beam indices to be used by the RU for actual transmission/reception.

Beam information proposed in the present disclosure may include 'information on a downlink transmit beam of the RU' and/or 'information on an uplink receive beam of the RU'. In addition, the beam index may include a 'downlink transmit beam index of the RU' and/or an 'uplink receive beam index of the RU'.

Method 1: An operating beam index of the RU determined by the gNB is dynamically indicated via the MT as side control information. This beam index may be indicated within the number of transmit/receive beam indices (N_{AC}) (i.e., the number of beams) supported by the RU. For example, the gNB may allocate and indicate the number of bits (e.g., 2 bits when N_{AC} = 4) that can express all the number of transmit/receive beam indices (N_{AC}) through a DCI field of a PDCCH for each transmission slot. This information may be transmitted via MAC-CE or PDCCH.

For purposes such as cost efficiency, the NCR may consider operating only a smaller number of beams than the gNB. In this case, since the number of beams supported by the RU is relatively small, it may be less burdensome to dynamically indicate the beam to be used by the RU among the beams supported by the RU.

Method 2: The gNB configures a transmit/receive candidate beam set (candidate beam set) of the RU including the number of beams (M), that is less than or equal to the number of transmit/receive beam indices (N_{AC}), to the MT, and then the gNB indicates, to the MT, the operating beam index of the RU among the M transmit/receive candidate beams.

In case of supporting high-performance NCR, only operating a large number of beams may be considered, and the number of beams supported by the RU may be large. In this case, there may be a burden in terms of signaling overhead when the gNB dynamically indicates, to the MT, the beam to be used by the RU among the beams supported by the RU.

If the value of the number of transmit/receive beam indices (N_{AC}) cannot be processed with a small number of bits in the method 1, overhead may occur in the dynamic indication. Therefore, the gNB may configure a transmit/receive beam set consisting of M beams and indicate, to the MT, the actual transmit/receive beam index within the configured beam set. In this instance, the value of M (≤N_{AC}) may be selected and defined by the gNB as the best beams for RU to transmit and receive through channel measurements between the gNB and the UE and may be set via RRC signaling.

For this operation, this method first proposes that the gNB configures, to the MT, information on the candidate beam set used by the RU. To this end, the gNB may configure, to the MT, information on M candidate beams that an RU can use among the N_{AC} RU beams.

FIG. 14 illustrates an example of a beam index configuration method according to an embodiment of the present disclosure.

Referring to FIG. 14, a transmit/receive candidate beam set consisting of M beams may be associated with actual transmit/receive beam indices. The gNB may configure, to the MT, the actual transmit/receive beam indices associated for each candidate beam index for M transmit/receive candidate beam sets.

As described above, the gNB may configure, to the MT, a transmit/receive beam set as the best beams to transmit and receive among N_{AC} beams via MAC-CE or RRC signaling. If the candidate beam set is defined as S, the number 'M' of candidate beam sets may be expressed as S = {s₁, s₂, ..., s_{M}}, and the N_{AC} beam indices may be expressed as d_{AC}={#0, #1, ..., #NAC-1}.

The MT may associate and configure the beam set selected and determined by the gNB and the actual transmit/receive beam index. For example, as illustrated in FIG. 14, if M=5 and N_{AC} = 10, S = {s₁, s₂, s₃, s₄, s₅} and d_{AC} = {#0, #1, ... #9} may be expressed and may be mapped as in {s₁-#1, s₂-#4, s₃-#5, s₄-#7, s5-#9}. In this case, the number of candidate beams and the configuration of the candidate beams may be configured differently for a downlink transmit beam and an uplink receive beam.

In addition, it is proposed that the gNB configures, to the MT, information on beams to be actually applied among the candidate beam set. To this end, the gNB indicates, to the MT, information on the beam index used by the RU among the M RU candidate beams via side control information. The MT, which receives the information as the side control information, may determine the actual transmit/receive beam of the RU from a table in which the candidate beam index and the actual applied beam index information are associated. This information may be transmitted via MAC-CE or PDCCH.

For another example, a beam direction during two steps may be proposed. To this end, it may be assumed that the side control information consists of two steps including transmission via MAC-CE and transmission for PDCCH. In this case, the gNB first configures the transmit/receive beam set to the MT using side control information via the MAC-CE, and configures an association between the transmit/receive beam set and the actual transmit/receive beam index (step 1). Afterwards, the gNB may indicate, to the MT, the transmit/receive beam index using side control information via the PDCCH (step 2). Considering the procedure of the above method 2, the following method may be additionally introduced for the method of configuring and indicating a downlink transmit beam and an receive beam of the RU.

Method 2-1: A candidate beam set for downlink transmit beams of the RU and a candidate beam set for uplink receive beams of the RU are independently configured (e.g., CandidateTxBeamIndex-NCR and CandidateRxBeamIndex-NCR are configured), and indications for the downlink transmit beams and the uplink receive beams are also independently performed. Specifically, the candidate beam sets for the downlink transmit beam and the uplink receive beam may be represented as S_{DL} and S_{UL}, respectively (# of each candidate beam is M_{DL} and M_{UL}). The gNB may configure, to the MT, an association relationship between each actual downlink transmit beam index and uplink receive beam index within the number of transmit/receive beam indices (N_{AC}) of the RU (i.e., M_{DL}, M_{UL} ≤ N_{AC}). Here, the gNB may select the M_{DL} and M_{UL} values as the best beams for the RU to transmit and receive and configure them to the MT. This configuration may be performed via, for example, RRC signaling or MAC-CE. Afterwards, the gNB may indicate, to the MT, information on the downlink transmit beam and the uplink receive beam to be actually applied by the RU via the side control information. In this case, the gNB may select and indicate the downlink transmit beam within S_{DL} which is a candidate beam set for the downlink transmit beam, and may select and indicate the uplink receive beam within S_{UL} which is a candidate beam set for the uplink receive beam.

Method 2-2: The gNB configures candidate beams for the downlink transmit beam and the uplink receive beam of the RU within one candidate beam set, and indicates, to the MT, the downlink transmit beam and the uplink receive beam to be applied by the RU within the beam set. A difference between the present method and the candidate beam set configuration of the method 2-1 above is that one candidate beam set simultaneously includes information on the downlink transmit beam and the uplink receive beam of the RU. For example, the gNB may configure a candidate beam set for the optimal downlink transmit beam and uplink receive beam of the RU through an RRC parameter such as CandidateBeamIndex-NCR, and may configure, to the MT, association with the actual transmit/receive beam indices of the RU.

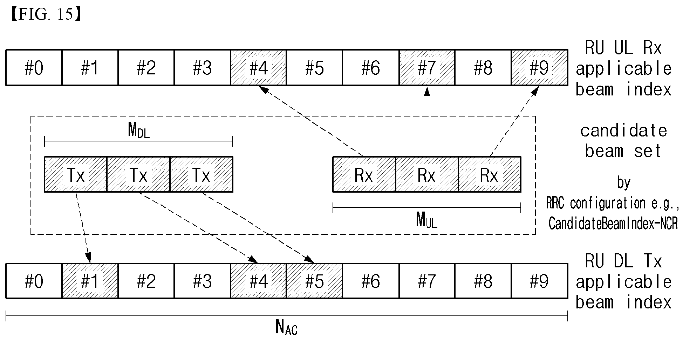

FIG. 15 illustrates an example of a beam index configuration method according to another embodiment of the present disclosure.

Referring to FIG. 15, for example, a candidate beam set of downlink transmit beams may be associated with {#1, #4, #5} of downlink transmit beam indices of the RU, and a candidate beam set of uplink receive beams may be associated with {#4, #7, #9} of receive beam indices of the RU. Afterwards, the gNB may indicate, to the MT, information on the downlink transmit beam and the uplink receive beam to be actually applied by the RU via side control information. In this case, the gNB may select and indicate downlink transmit beams to be applied by the RU from among candidate downlink transmit beams included in the corresponding candidate beam set, and may select and indicate uplink receive beams to be applied by the RU from among candidate uplink receive beams.

Method 3: This method may configure a plurality of candidate beam sets and configure association between the candidate beam sets and actual transmit/receive beam indices. For example, if there are multiple UEs (e.g., C UEs) served by one NCR, the gNB may configure C candidate beam sets corresponding to each UE, determine the association of actual transmit and receive beam indices for each UE, and configure them to the MT. In this case, the beam indices constituting each candidate beam set may overlap each other.

That is, the gNB may configure a plurality of candidate beam sets to the MT. Each of the candidate beam sets may have set indices, and information on the set indices may be configured together. Alternatively, each candidate beam set may be associated with one UE or multiple UEs, and information on UE ID associated for each candidate beam set may be configured together. Alternatively, information on set indices of a candidate beam set associated for each UE ID may be configured.

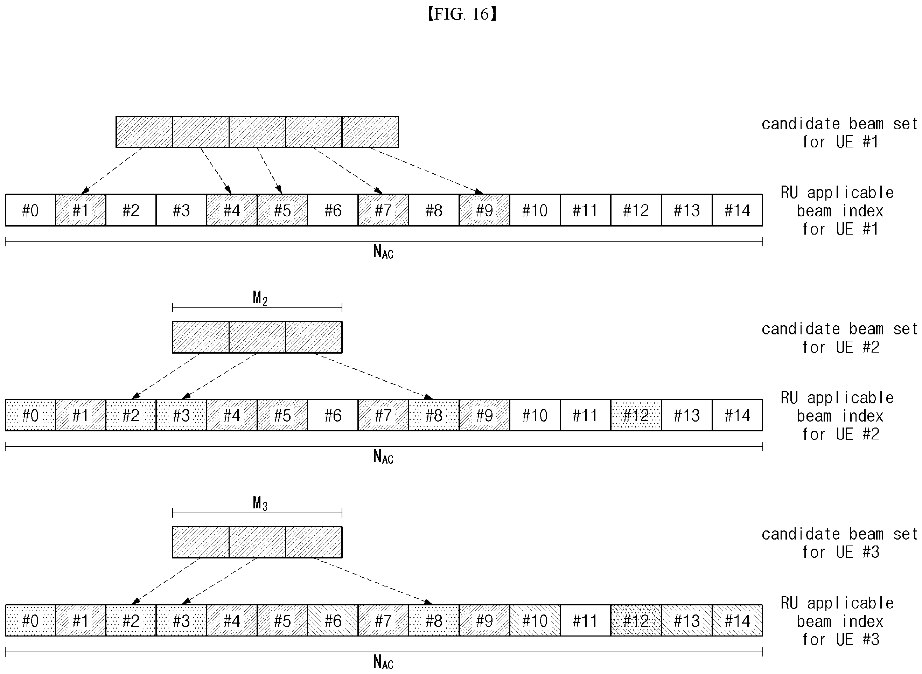

FIG. 16 illustrates an example of a beam index configuration method according to yet another embodiment of the present disclosure.

FIG. 16 illustrates an example of configuration of a candidate beam set based on the UE when a candidate beam set is differently configured for each UE. In FIG. 16, candidate beam sets including M1, M2, and M3 beam indices are configured for UE#1, UE #2, and UE #3, respectively. FIG. 16 illustrates that beam indices of the RU constituting different candidate beam sets do not overlap each other, by way of example. Unlike this, beam indices of the RU constituting different candidate beam sets may overlap each other.

Afterwards, the gNB may inform the MT of the beam indices to be actually applied by the RU via the side control information. In this case, since there are multiple candidate beam sets of the RU, the gNB shall also indicate the index of the candidate beam set in order to indicate the beam index to be applied by the RU. That is, the gNB may indicate, to the MT, indices of the candidate beam set to be applied by the RU and beam index information. In this case, if the candidate beam set is associated with the UE, the index of the candidate beam set may be replaced by the UE ID.

Based on the above procedure that is configured and indicated through the plurality of candidate beam sets, a method for the gNB to configure and indicate an association with downlink transmit beam and uplink receive beam of the RU may be additionally considered as follows.

Method 3-1: Candidate beam sets for downlink transmit beams and uplink receive beams of the RU are independently configured, and indications for downlink transmit beams and uplink receive beams to be used for actual transmission are also independently performed. More specifically, the gNB may configure a plurality of candidate beam sets for the downlink transmit beams and a plurality of candidate frame sets for the uplink receive beams. Afterwards, the gNB may indicate, to the MT, information on the downlink transmit beam and the uplink receive beam to be actually applied by the RU via the side control information. In this case, the gNB may select information on a candidate beam set of downlink transmit beams to be applied for configuration of the downlink transmit beams and downlink transmit beams to be applied within the candidate beam set and may indicate them to the MT. The gNB may select information on a candidate beam set of uplink receive beams to be applied for configuration of the uplink receive beams and uplink receive beams to be applied within the candidate beam set and may indicate them to the MT. Since information on the downlink candidate beam and the uplink candidate beam is separately handled, flexible configuration and indication that are not limited to a specific beam pair configuration can be performed.

Method 3-2: A plurality of candidate beam sets may be configured, and a plurality of candidate beams for downlink transmit beams and a plurality of candidate beams for uplink receive beams may be configured in each candidate beam set. Afterwards, the gNB may indicate, to the MT, information on the downlink transmit beam and the uplink receive beam to be actually applied by the RU via side control information. In this case, the gNB may indicate together information on a candidate beam set to be applied to the RU. That is, the gNB may select and indicate downlink transmit beams to be applied by the RU from among candidate downlink transmit beams included in the corresponding candidate beam set, and may select and indicate uplink receive beams to be applied by the RU from among candidate uplink receive beams.

Method 3-3: Considering that a beam indication is performed in units of beam pair, the gNB may configure a subset configuration in a candidate beam set in the form of a pair of {downlink transmit beam index, uplink receive beam index} and configure an association.

That is, the gNB may configure a plurality of candidate beam sets and configure pair information of a plurality of candidate beam indices {downlink transmit beam index, uplink receive beam index} to each candidate beam set. That is, the gNB may associate an index of each candidate beam in the candidate beam set with a pair of {downlink transmit beam index, uplink receive beam index}. Afterwards, the gNB may indicate, to the MT, information on the downlink transmit beam and the uplink receive beam to be actually applied by the RU via side control information. In this case, the gNB may indicate together information on a candidate beam set to be applied to the RU and information on candidate beam indices. When the gNB indicates information on the candidate beam set and the candidate beam indices, the downlink transmit beam index and the uplink receive beam index corresponding to the candidate beam indices in the corresponding candidate beam set may refer to the downlink transmit beam and the uplink receive beams to be applied by the RU.

In the above methods, the information of the candidate beam set may mean the indices of the candidate beam set. Alternatively, if the candidate beam set is associated with a UE, the information of the candidate beam set may mean a UE ID. In addition, the configuration for the above methods 3-1, 3-2, and 3-3 may be performed by the gNB and may be provided to the MT via the side control information. The MT may indicate the beam index of the RU via the side control information provided in each proposed method.

The above methods perform beam adaptation of the RU by mapping between a single beam index of the RU and a candidate beam set at a specific time for downlink transmission and/or uplink reception among the total number of transmit/receive beam (i.e., available beam) indices (N_{AC}) of the RU or directly indicating the single beam index of the RU to the MT. That is, a method of configuring/indicating the operation of the single beam index of the RU has been proposed.

When the NCR is implemented with a multi-antenna array, multi-beam transmission and reception of an RU access link may be expected at a specific time. In this case, the RU may be expected to simultaneously perform downlink transmission through multi-beam and uplink reception through multi-beam at a specific time. In order to perform multi-beam transmission and reception of the RU, each index of the candidate beam set may be extended to not only mapping with a single beam index of the RU but also mapping with multi-beam indices of the RU. Afterwards, in order to transmit and receive the multi-beam to the access link of the RU, there must be a configuration/indication of the gNB related to the multi-beam operation. To this end, the gNB may utilize NCR capability information including multi-beam related information reported from the MT. The multi-beam transmission/reception configuration/indication of the gNB may be received by the MT and applied to the RU. From this perspective, a method for the gNB to configure/indicate the multi-beam transmission/reception may be proposed as follows.

Method 4: The gNB configures and indicates access link multi-beam transmission/reception of the RU based on a multi-beam set list of NCR capability information.

A method is proposed in which the gNB configures/indicates access link multi-beam transmission/reception based on NCR capability information reported by the gNB from the MT for multi-beam reception/reception of the RU. The NCR capability information may include a multi-beam set list for the access link of the RU. The multi-beam set list refers to a list that enumerates multiple beam indices (i.e., multi-beam sets) of an RU access link capable of multi-beam transmission and reception. In this case, each multi-beam set may be configured based on type information for each transmit/receive beam (i.e., available beam) index in the access link of the RU described above. For example, if N_{AC}=15 with respect to the total number of transmit/receive beams (i.e., available beams) (N_{AC}) of the access link of the RU is configured as {beam#0,1, ..., #14}, the multi-beam set may be defined as a combination that enables multi-beam transmission and reception in the form of multi-beam indices as well as a single beam index, such as set#0={beam#1, beam#3}, set#1={beam#5}, set#2={beam#3, beam#4, beam#7}.

In this case, the gNB may configure, to the MT, a candidate beam set including the best beams for transmission and reception among beams included in a multi-beam set configured based on N_{AC} RU access transmit/receive beam indices via MAC-CE or RRC signaling as described above. The gNB may form a mapping relationship between a specific multi-beam set (i.e., a single/multi-beam index of the RU) and a specific index of a candidate beam set. In the following, the multi-beam set and the single/multi-beam index may be interpreted with the same meaning.

More specifically, unlike the above-described methods 2 and 3 in which each of M indices of any candidate beam set has a mapping relationship with a single beam index of the RU, it may be considered that each of M indices of any candidate beam set is mapped with not only a single beam index but also multi-beam indices of the RU. Therefore, the mapping relationship between the single/multi-beam indices of the RU and the indices within the candidate beam set may be represented as follows.

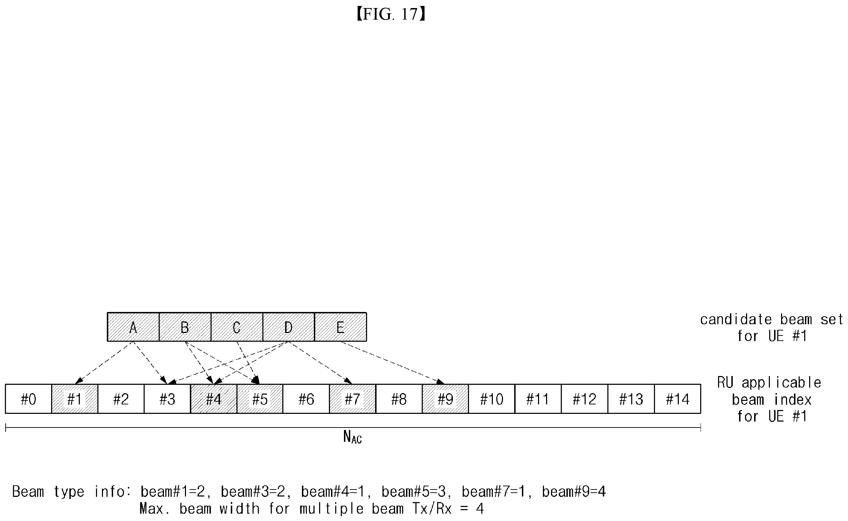

FIG. 17 illustrates an example of a mapping relationship between single/multiple beam index(es) and indices in a candidate beam set according to an embodiment of the present disclosure.

Referring to FIG. 17, a case where there is one candidate beam set (i.e., a single user (a single UE)) is taken as an example, and each of a plurality of candidate beam sets (i.e., multiple users (multiple UEs)) may be mapped in the same or similar form as single/multiple beam index of the RU.

If the candidate beam set is defined as S, the number 'M' of candidate beam sets may be expressed as S = {s₁, s₂, ..., s_{M}}, and N_{AC} multi-beam indices may be expressed as k_{AC} = {set#0, set#1, ..., set#(N_{AC}-1)}.

In this way, the gNB may configure an association between the determined candidate beam set and the actual multi-beam set. For example, as illustrated in FIG. 17, assuming that there are beams #A to #E as candidates that can perform transmission through the candidate beam set (M=5), when the multi-beam set list for the access link of the RU included in NCR capability information is configured as set #0 to 4, i.e., set#0={beam#1, beam#3}, set#1={beam#3, beam#4, beam#7}, set#2={beam#4, beam#5}, set#3={beam#5}, set#4={beam#9}, a mapping relationship in the form of candidate beam set index-multi-beam set index may be defined based on the decision of the gNB. The form such as beam#A-set#0, beam#B-set#2, and beam#D-set#1 may be a case where indices of the candidate beam set are associated with multi-beam indices. Alternatively, a mapping relationship between indices of the candidate beam set and single beam indices may also be formed in the form such as beam#C-set#3 and beam#E-set#4. That is, the mapping between the indices of the candidate beam set and the multi-beam set may be defined based on the decision of the gNB to enable multi-beam operation as well as single-beam operation of the RU access link.

In particular, when the mapping is performed as described above, the multi-beam indices constituting the multi-beam set may have to be narrow beams. More specifically, considering the beam type of single/multiple beam indices constituting the multi-beam set, the multi-beam set shall be equal to or less than the total number of multi-beams (Lₘₐₓ) described above. There cannot be a multi-beam set larger than the total number of multi-beams (Lₘₐₓ), but even if the gNB receives a report due to any errors, the gNB performs mapping only with multi-beam sets that are equal to or less than the total number of multi-beams (Lₘₐₓ).

In this case, the number of candidate beams and the configuration of the candidate beams may be configured differently for the downlink transmit beam and the uplink receive beam. In addition, it is proposed that the gNB configures, to the MT, information on beams to be actually applied among the candidate beam sets. To this end, the gNB indicates, to the MT, information on the beam index used by the RU among the M RU candidate beams via side control information. The MT receives the information via the side control information. The MT may determine the actual transmit/receive beam of the RU from a table in which the candidate beam index and the beam index information to be actually applied are associated. Here, the transmit/receive beam may be a single and/or multi-beam defined in the multi-beam set. This information may be transmitted via MAC-CE or PDCCH.

For example, if a multi-beam set of the RU mapped to beam#A among the candidate beam sets defined by the gNB is {beam#1, beam#3}, when the MT is indicated by the gNB via side control information to apply the beam#A as the access link beam, transmit/receive beams on the access link of the actual NCR mapped to the beam#A are beam#1 and beam#3. Therefore, the two beam directions are applied as transmit and receive beams on the access link. For another example, if the mapping relationship of candidate beam set-RU access link multi-beam is defined as beam#B-{beam#0, beam#1 } and beam#C-{beam#2}, the beam#B is configured for downlink transmission, and the beam#C is configured for uplink reception, when the MT is indicated the beam#B as the access link beam, the access link beam of the actual NCR simultaneously performs the downlink transmission in two beam directions of beam#0 and beam#1, and when the MT is indicated the beam#C as the transmit/receive beam on the access link beam, a receive beam on the access link of the actual NCR may be beam#2, and the RU performs the uplink reception through the beam#2.

For another example, a beam direction during two steps may be proposed. To this end, it may be assumed that the side control information consists of two steps including transmission via MAC-CE and transmission for PDCCH. In this case, the gNB first configures a candidate beam set with side control information via the MAC-CE, and then configures an association between the configured candidate beam set and the actual multi-beam set. Afterwards, the gNB may indicate, to the MT, the transmit/receive beam index using side control information via the PDCCH.

A method of configuring and indicating an association with a downlink transmit beam and an uplink receive beam of an RU based on the above-described procedure of configuring and indicating a transmit/receive beam index through a candidate beam set configured and indicated through single or multiple candidate beam sets may be additionally considered. In particular, in the following methods, the downlink transmit beam/uplink receive beam can be interpreted as including both single/multi-beam. Alternatively, the downlink transmit beam/uplink receive beam can be interpreted as downlink transmit beams/uplink receive beams and a downlink transmit multi-beam set/uplink receive multi-beam set.

Method 4-1: Candidate beam sets for downlink transmit beams and uplink receive beams of the RU are independently configured, and indications for downlink transmit beams and uplink receive beams to be used for actual transmission are also independently performed. More specifically, the gNB may configure a plurality of candidate beam sets for the downlink transmit beams and a plurality of candidate frame sets for the uplink receive beams, and then may indicate, to the MT, information on the downlink transmit beam and the uplink receive beam to be actually applied by the RU via side control information. In this case, the gNB may select information on a candidate beam set of downlink transmit beams to be applied for configuration of the downlink transmit beams and downlink transmit beams to be applied within the candidate beam set and may indicate them to the MT. The gNB may select information on a candidate beam set of uplink receive beams to be applied for configuration of the uplink receive beams and uplink receive beams to be applied within the candidate beam set and may indicate them to the MT. Since information on the downlink candidate beam and the uplink candidate beam is separately handled, flexible configuration and indication that are not limited to a specific beam pair configuration can be performed.

Method 4-2: A plurality of candidate beam sets may be configured, and a plurality of candidate beams for downlink transmit beams and a plurality of candidate beams for uplink receive beams may be configured in each candidate beam set. Afterwards, the gNB may indicate, to the MT, information on the downlink transmit beam and the uplink receive beam to be actually applied by the RU via side control information. In this case, the gNB may indicate together information on a candidate beam set to be applied to the RU. That is, the gNB may select and indicate downlink transmit beams to be applied by the RU from among candidate downlink transmit beams included in the corresponding candidate beam set, and may select and indicate uplink receive beams to be applied by the RU from among the candidate uplink receive beams.

Method 4-3: Considering that an indication is performed in units of beam pair, the gNB may configure a subset configuration in a candidate beam set in the form of a pair of {downlink transmit beam index, uplink receive beam index} and configure an association. That is, the gNB may configure a plurality of candidate beam sets and configure pair information of a plurality of candidate beam indices {downlink transmit beam index, uplink receive beam index} to each candidate beam set. That is, an index of each candidate beam in the candidate beam set may be associated with a pair of {downlink transmit beam index, uplink receive beam index}. Afterwards, the gNB may indicate, to the MT, information on the downlink transmit beam and the uplink receive beam to be actually applied by the RU via side control information. In this case, the gNB may indicate together information on a candidate beam set to be applied to the RU and information on candidate beam indices. When the gNB indicates information on the candidate beam set and the candidate beam indices, the downlink transmit beam index and the uplink receive beam index corresponding to the candidate beam indices in the corresponding candidate beam set may refer to the downlink transmit beam and the uplink receive beams to be applied by the RU.

In the above methods, the information of the candidate beam set may mean the indices of the candidate beam set. Alternatively, if the candidate beam set is associated with a UE, the information of the candidate beam set may mean a UE ID. In addition, the configuration for the above methods 4-1, 4-2, and 4-3 may be performed by the gNB and may be provided to the MT via the side control information. The MT may indicate yjr multi-beam set of the RU via the side control information provided in each proposed method.

In the proposed methods above, the access link transmit/receive beam indication of the RU may vary depending on which backhaul link beam is used for transmission/reception. In a more specific manner, the following approaches may be considered. Hereinafter, NCR-MT may be the above-described MT, and NCR-Fwd may be the RU.

Approach 1: There may be a candidate beam set mapped to a specific backhaul link beam index, and when the NCR-Fwd performs downlink reception or uplink transmission on the backhaul link beam index, the NCR-Fwd may perform downlink transmission or uplink reception on a beam index of an actual access link mapped to the candidate beam set associated with the backhaul link beam index.

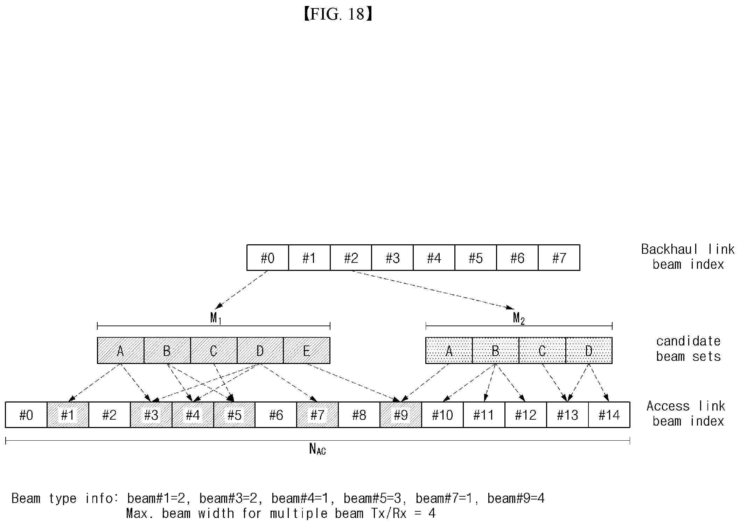

FIG. 18 illustrates an example of association between beam indices of a backhaul link and a candidate beam set according to an embodiment of the present disclosure.

Referring to FIG. 18, backhaul link beam#0 is associated with candidate beam set #M1, and backhaul link beam#2 is associated with candidate beam set#M2. However, the number of candidate beam sets is not limited to two. More candidate beam sets can be configured depending on the capability of the gNB, and an association relationship between the candidate beam sets and the backhaul link index can also be configured more variously.

Among them, if the gNB and the NCR-Fwd are connected via the actual backhaul link beam#2, the NCR-Fwd may perform transmission and reception on access link beams mapped to the candidate beam set#M2 among the beams of the access link.

For example, a direction of a beam is associated with the backhaul link beam#2 and the candidate beam set#M2 of the access link in a situation where the gNB intends to broadcast a synchronization signal block (SSB), and when the gNB indicates the downlink transmission through index#D of the candidate beam set#M2, if the NCR-MT performs downlink reception on the backhaul link beam#2 when the gNB performs SSB transmission, the NCR-MT triggers downlink transmission to index#D of set#M2 indicated through the associated candidate beam set#M2.

In this case, the NCR-Fwd performs downlink transmission through the mapped multi-beam index combination {beam#13, beam#14}. Alternatively, on the contrary, a resource block offset (RO) is configured to 1: 1 SSB-to-RO mapping in order to receive uplink using a PRACH preamble. When uplink reception is performed on index#D of candidate beam set#M2 used for downlink transmission, the NCR-Fwd actually performs uplink reception through {beam#13, beam#14} of the access link mapped to the index#D. Then, the NCR-MT performs uplink transmission through the backhaul link beam#2 associated with the index#D of the candidate beam set#M2 of the access link.

For this operation, information on the backhaul link beam associated with each candidate beam set may be configured from the gNB to the NCR. Alternatively, the candidate beam set associated with each backhaul link beam may be configured. A UE may determine a candidate beam set associated with a backhaul link beam according to a backhaul link beam applied by the NCR in a specific time resource as a candidate beam set used for indicating an access link beam in the corresponding time resource.

Approach 2: If there is an index of a candidate beam set mapped to a specific backhaul link beam index and the NCR-MT performs downlink reception or uplink transmission based on the beam index of the backhaul link, the NCR-Fwd can perform downlink transmission or uplink reception based on an index of a candidate beam set of an access link associated with the beam index of the backhaul link.

This method differs from the association of the backhaul link beam-candidate beam set of the approach 1 in that it configures a relationship between specific indices of the backhaul link beam and the candidate beam set.

For example, assuming that a direction of a beam used by the gNB to broadcast the SSB is associated with index#n of a backhaul link and index#m of a candidate beam set of an access link, and that the candidate beam index#m is mapped to {beam#1, beam#3} which is a multi-beam index combination of the actual access link, if the NCR-MT performs downlink reception on a specific index#n of the backhaul link when the gNB transmits the SSB, the downlink transmission is triggered in the NCR-Fwd through the candidate beam index#m associated with the specific index#n of the backhaul link.

In this case, the actual beam direction in the access link of the NCR-Fwd may be {beam#1, beam#3} mapped to index#m, and the downlink transmission is performed through this. Alternatively, on the contrary, RO is configured to 1:1 SSB-to-RO mapping in order to receive uplink in a PRACH preamble. When uplink reception is performed on candidate beam index#m used for downlink transmission, the NCR-Fwd performs uplink reception on {beam#1, beam#3} of the access link mapped to the index#m.

### Method of indicating actual transmit/receive beam of RU in access link based on reference signal (RS) ID

The above-described beam indication is a transmit/receive beam index-based indication procedure for the NCR-MT newly introduced in the NCR, but there has not yet been determined a method of performing an indication to an RS ID based on the procedure and configuration of existing beam management. Therefore, although the NCR cannot fully know RS information received from the gNB, there may be a method of linking transmit/receive beam information of an RU to RS ID and performing a beam indication to the corresponding RS ID.

More specifically, when the beam management is performed in an NCR topology environment, a method of allocating the RS IDs to beams reported through an access link (i.e., beams passing through UE-NCR-gNB) among measurement reports of the UE can be considered.

Here, the RS ID from a perspective of the RU may mean an SSB resource ID (SSBRI), a CSI-RS resource ID (CRI), a TCI state ID, etc. in the case of DL Tx, and may mean an SRS resource ID (SRI) in the case of UL Rx. The use of the RS ID has the advantage of being able to align and respond to a mechanism of existing beam management.

To this end, in the method described above, the beam index can be replaced by the RS ID and applied. That is, the gNB may indicate a beam direction. to which the NCR-MT is applied, to the NCR-RU by indicating to NCR-MT using the RS ID instead of the beam index. In this case, the beam direction of the NCR-RU corresponding to the RS ID may be 1) solved by the NCR implementation, or 2) the gNB may configure the beam index of the NCR-RU for each RS ID. Specifically, the following method can be applied.

Method 1: The NCR may be indicated information of the RS ID from the gNB via side control information received by the NCR-MT in order to determine a transmit/receive beam direction of the RU. The RS for the downlink transmit beam of the NCR-RU corresponding to the access link may be an SSB or a CSI-RS, and the RS for the uplink receive beam may be a sound reference signal (SRS). With this information, the NCR-RU may perform beamforming through the transmit/receive beam with the RS ID indicated by the NCR-MT. In this case, the direction of the transmit/receive beam of the corresponding RU for each RS ID may be assumed to be an implementation of the NCR or an OAM setting.

Method 2: A beam index may be configured for each RS ID, and the RS ID may be indicated via side control information. For example, when there are four SSB beam indices (SSB#0 to SSB#3) of the gNB and four SSB beam indices (SSBRU#0 to SSBRU#3) of the RU in the downlink transmission and a beam configured through beam management in a fronthaul link is SSB#3, the beams of the access link passing through the NCR may be allocated to four indices: SSB#3-SSBRU#0 to SSB#3-SSBRU#3. In this case, the gNB may configure an associated RS ID for each of the four beam indices of the access link and provide configuration information to the NCR-MT via the side control information.

That is, the NCR may be indicated information of the RS ID from the gNB via the side control information received by the NCR-MT in order to determine the transmit/receive beam direction of the RU. In this case, the transmit/receive beam index of the corresponding RU for each RS ID may be configured. To this end, the gNB may configure the transmit/receive beam index information of the corresponding RU for each RS ID to the NCR-MT via signaling such as RRC or MAC-CE.

Method 3: A beam index for each RS ID may be configured for a plurality of candidate beam sets, and a set index and the RS ID may be indicated via side control information. The procedure of the method 2 may be extended to the plurality of candidate beam sets, and thus the gNB may configure an RS ID associated with the NCR-RU transmit/receive beam index for each set and an index as to which set it indicates. The gNB may provide the configuration information to the NCR-MT via the side control information.

That is, since the gNB can configure a plurality of candidate beam sets to the NCR-MT, the candidate beam sets may each have a set index, and information on the set index may be configured together. Alternatively, each candidate beam set may be associated with one or multiple UEs, and thus information on the associated UE ID for each candidate beam set may be configured together. Alternatively, information on a set index of an associated candidate beam set for each UE ID may be configured. In this case, the NCR-MT may be configured, by the gNB, with the transmit/receive beam index of the NCR-RU corresponding to each RS ID for each candidate beam set. To this end, the gNB may configure the transmit/receive beam index information of the NCR-RU corresponding to each RS ID for each candidate beam set via signaling such as RRC or MAC-CE.

Afterwards, the NCR may be indicated information on a candidate beam set applied from the gNB and information of RS ID via side control information received by the NCR-MT, in order to determine the transmit/receive beam direction of the NCR-RU. The information on the candidate beam set may refer to an index of the candidate beam set, or if the candidate beam set is associated with the UE, the information on the candidate beam set may refer to a UE ID.

### Method of applying beam of NCR-RU based on configured beam index or RS ID

Through the above method, the NCR may be configured, by the gNB, with a downlink transmit beam index (or RS ID) and/or an uplink receive beam index (or RS ID) to be applied by the NCR-RU in a specific time resource. In this case, the actual beam direction of the NCR-RU corresponding to a specific beam index (or RS ID) may be determined as follows.
Method 1: It is an implementation issue of an NCR-RU and is determined by the NCR-RU.
Method 2: A beam direction is configured for each beam index (or RS ID) through OAM configuration, etc.

In this case, the NCR-RU shall perform transmission and reception by applying the same transmit/receive beam direction in time resources configured to apply the same transmit/receive beam index (or RS ID).

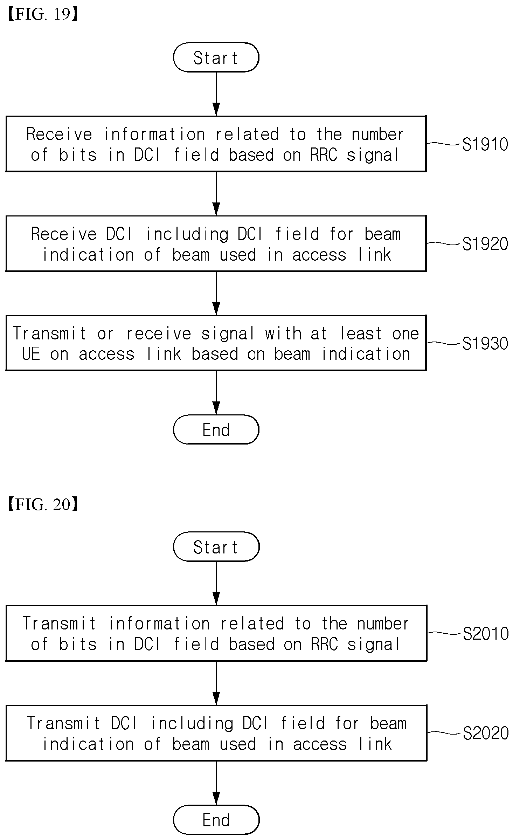

FIG. 19 is a flowchart illustrating a signal transmission/reception method according to an embodiment of the present disclosure.

In FIG. 19, an electronic device may be the NCR described above, but is not limited thereto.

Referring to FIG. 19, the electronic device may receive, from a base station, an RRC signal including information related to the number of bits in a DCI field required to represent indicatable beams, in S1910.

Before receiving the RRC signal, the electronic device may transmit, to the base station, information related to first indices of a plurality of available beams in an access link, and receive information on at least one candidate beam set related to some of the plurality of available beams.

The indicatable beams may correspond to candidate beams included in the at least one candidate beam set.

A beam indication may include at least one of information on a second index of at least one downlink transmit beam (DL Tx beam) of the candidate beams or information on a third index of at least one uplink receive beam (UL Rx beam) of the candidate beams.

The at least one candidate beam set may include a DL Tx candidate beam set related to the second index and a UL Rx candidate beam set related to the third index, or one candidate beam set of the at least one candidate beam set may include DL Tx candidate beams related to the second index and UL Tx candidate beams related to the third index.

The at least one candidate beam set may include a plurality of candidate beam pairs. Each of the plurality of candidate beam pairs may include one DL Tx candidate beam and one UL Tx candidate beam. The second index and the third index may be related to a DL Tx candidate beam and an UL Tx candidate beam in one candidate beam pair of the plurality of candidate beam pairs.

First information related to the first indices of the plurality of available beams may include information related to a beam width of each of the plurality of available beams and information related to a plurality of multi-beam sets. Each of the plurality of multi-beam sets may be related to a combination of a plurality of DL Tx beams simultaneously capable of a downlink transmission among the plurality of available beams or a combination of a plurality of UL Rx beams simultaneously capable of an uplink reception among the plurality of available beams.

Second information may include information related to a mapping relationship between the at least one candidate beam set and the plurality of multi-beam sets, and third information may include an index of one multi-beam set of the plurality of multi-beam sets based on the mapping relationship. A total of beam widths of the plurality of multi-beam sets configured with the mapping relationship with the at least one candidate beam set may be less than or equal to a set beam width.

The electronic device may receive, from the base station, DCI including the DCI field for a beam indication of a beam used in an access link between the electronic device and at least one UE among the indicatable beams, in S1920.

The at least one UE may include a plurality of UEs.

In the step S1910, if the at least one candidate beam set includes a plurality of candidate beam sets and the at least one UE includes a plurality of UEs, each of the plurality of candidate beam sets may be associated with each of the plurality of UEs based on a UE identifier (ID) of each of the plurality of UEs.

The electronic device may transmit or receive a signal with the at least one UE based on the beam indication, in S1930.

FIG. 20 is a flowchart illustrating a signal transmission/reception method according to another embodiment of the present disclosure.

In FIG. 20, an electronic device may be the NCR described above, but is not limited thereto.

A base station may transmit, to an electronic device, an RRC signal including information related to the number of bits in a DCI field required to represent indicatable beams, in S2010.

Before transmitting the RRC signal, the base station may transmit, to the electronic device, information related to first indices of a plurality of available beams in an access link, and transmit information on at least one candidate beam set related to some of the plurality of available beams.

The indicatable beams may correspond to candidate beams included in the at least one candidate beam set. A beam indication may include at least one of information on a second index of at least one downlink transmit beam (DL Tx beam) of the candidate beams or information on a third index of at least one uplink receive beam (UL Rx beam) of the candidate beams.

The at least one candidate beam set may include a DL Tx candidate beam set related to the second index and a UL Rx candidate beam set related to the third index, or one candidate beam set of the at least one candidate beam set may include DL Tx candidate beams related to the second index and UL Tx candidate beams related to the third index.

The at least one candidate beam set may include a plurality of candidate beam pairs. Each of the plurality of candidate beam pairs may include one DL Tx candidate beam and one UL Tx candidate beam. The second index and the third index may be related to a DL Tx candidate beam and an UL Tx candidate beam in one candidate beam pair of the plurality of candidate beam pairs.

First information related to the first indices of the plurality of available beams may include information related to a beam width of each of the plurality of available beams and information related to a plurality of multi-beam sets. Each of the plurality of multi-beam sets may be related to a combination of a plurality of DL Tx beams simultaneously capable of a downlink transmission among the plurality of available beams or a combination of a plurality of UL Rx beams simultaneously capable of an uplink reception among the plurality of available beams.

Second information may include information related to a mapping relationship between the at least one candidate beam set and the plurality of multi-beam sets, and third information may include an index of one multi-beam set of the plurality of multi-beam sets based on the mapping relationship. A total of beam widths of the plurality of multi-beam sets configured with the mapping relationship with the at least one candidate beam set may be less than or equal to a set beam width.

The base station may transmit, to the electronic device, DCI including the DCI field for a beam indication of a beam used in an access link between the electronic device and at least one UE among the indicatable beams, in S2020.

The beam indication may be related to transmission or reception of a signal for the at least one UE of the electronic device in the access link.

The at least one UE may include a plurality of UEs.

In the step S2010, if the at least one candidate beam set includes a plurality of candidate beam sets and the at least one UE includes a plurality of UEs, each of the plurality of candidate beam sets may be associated with each of the plurality of UEs based on a UE identifier (ID) of each of the plurality of UEs.

### Communication system applicable to the present disclosure

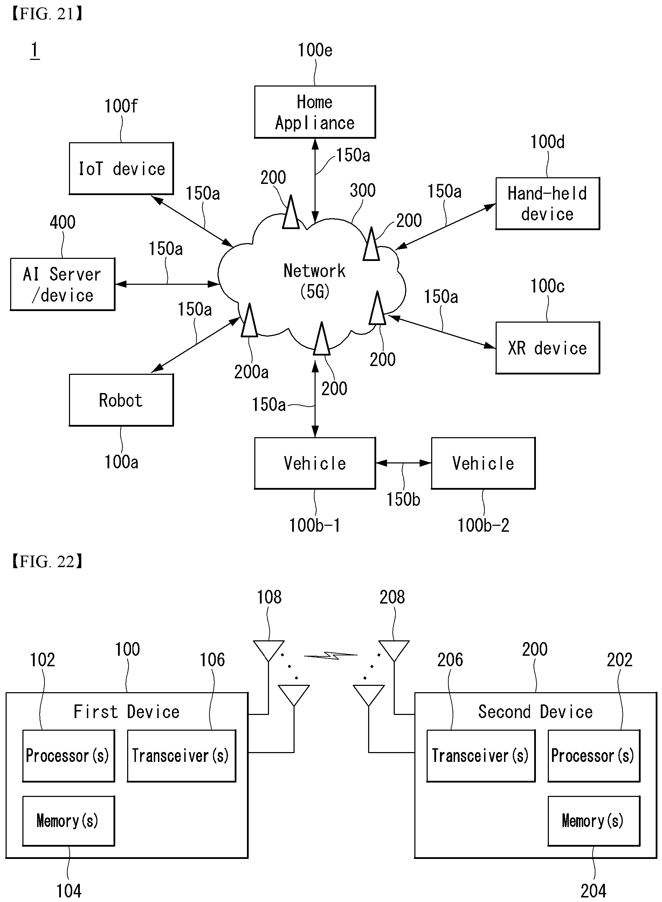

FIG. 21 illustrates a communication system applied to various embodiments of the present disclosure.

Referring to FIG. 21, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE), 6G wireless communication) and may be referred to as communication/radio/5G devices/6G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, or a 6G network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Wireless device applicable to the present disclosure

Examples of wireless devices to which various embodiments of the present disclosure are applied are described below.

FIG. 22 illustrates wireless devices applicable to various embodiments of the present disclosure.

Referring to FIG. 22, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 21.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

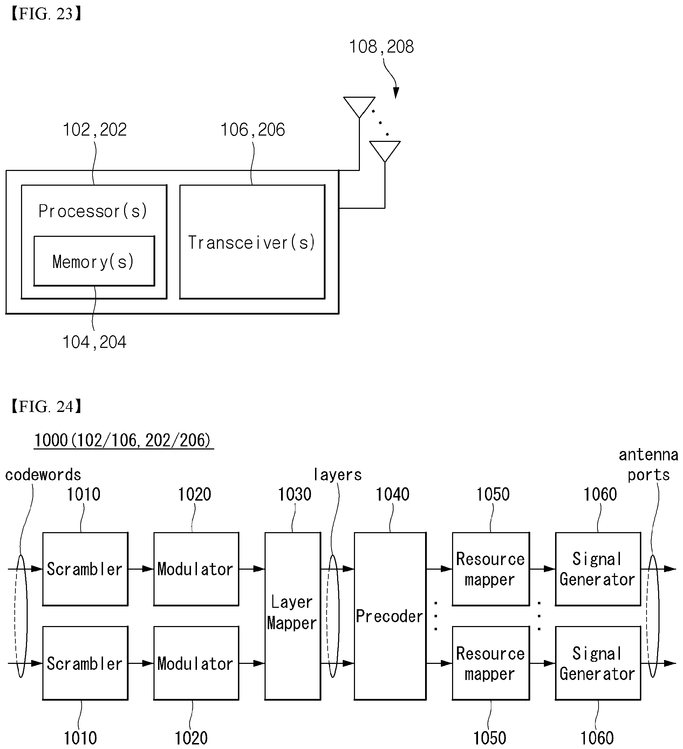

FIG. 23 illustrates another example of wireless devices applicable to various embodiments of the present disclosure.

According to FIG. 23, a wireless device may include at least one processor 102 and 202, at least one memory 104 and 204, at least one transceiver 106 and 206, one or more antennas 108 and 208.

A difference between the example of the wireless device illustrated in FIG. 22 and the example of the wireless device illustrated in FIG. 23 is that the processors 102 and 202 and the memories 104 and 204 are separated from each other in FIG. 22, but the memories 104 and 204 are included in the processors 102 and 202 in FIG. 23.

Here, the detailed description of the processors 102 and 202, the memories 104 and 204, the transceivers 106 and 206, and the antennas 108 and 208 are the same as described above, and thus the description of the repeated description is omitted in order to avoid unnecessary repetition of description.

Examples of signal processing circuit to which various embodiments of the present disclosure are applied are described below.

FIG. 24 illustrates a signal processing circuit for a transmission signal.

Referring to FIG. 24, a signal processing circuit 1000 may include scramblers 1010, modulators 1020, a layer mapper 1030, a precoder 1040, resource mappers 1050, and signal generators 1060. An operation/function of FIG. 24 may be performed, without being limited to, the processors 102 and 202 and/or the transceivers 106 and 206 of FIG. 22. Hardware elements of FIG. 24 may be implemented by the processors 102 and 202 and/or the transceivers 106 and 206 of FIG. 22. For example, blocks 1010 to 1060 may be implemented by the processors 102 and 202 of FIG. 22. Alternatively, the blocks 1010 to 1050 may be implemented by the processors 102 and 202 of FIG. 22 and the block 1060 may be implemented by the transceivers 106 and 206 of FIG. 22.

Codewords may be converted into radio signals via the signal processing circuit 1000 of FIG. 24. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 24. For example, the wireless devices (e.g., 100 and 200 of FIG. 22) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

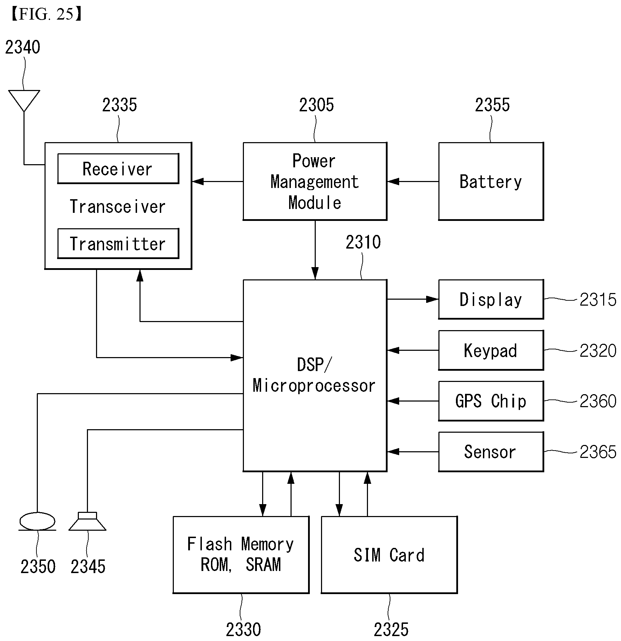

FIG. 25 illustrates an example of a wireless communication device applicable to the present disclosure.

Referring to FIG. 25, a wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 may implement functions, procedures and methods described in the present disclosure. The processor 2310 in FIG. 25 may be the processors 102 and 202 in FIG. 23.

The memory 2330 is connected to the processor 2310 and stores information related to operations of the processor 2310. The memory 2330 may be located inside or outside the processor 2310 and connected to the processor through various techniques such as wired connection and wireless connection. The memory 2330 in FIG. 25 may be the memories 204 and 204 in FIG. 23.

A user may input various types of information such as telephone numbers using various techniques such as pressing buttons of the keypad 2320 or activating sound using the microphone 2350. The processor 2310 may receive and process the information of the user and execute an appropriate function such as calling using the input telephone number. In some scenarios, data may be retrieved from the SIM card 2325 or the memory 2330 to execute appropriate functions. In some scenarios, the processor 2310 may display various types of information and data on the display 2315 for user convenience.

The transceiver 2335 is connected to the processor 2310 and transmit and/or receive radio frequency (RF) signals. The processor 2310 may control the transceiver 2335 in order to start communication or to transmit RF signals including various types of information or data such as voice communication data. The transceiver 2335 includes a transmitter and a receiver for transmitting and receiving the RF signals. The antenna 2340 may facilitate transmission and reception of the RF signals. In some implementation examples, when the transceiver receives an RF signal, the transceiver may forward and convert the signal into a baseband frequency for processing performed by the processor. The signal may be processed through various techniques, such as converting into audible or readable information, and output through the speaker 2345. The transceiver 2335 in FIG. 25 may be the transceivers 106 and 206 in FIG. 23.

Although not illustrated in FIG. 25 various components such as a camera and a universal serial bus (USB) port may be additionally included in the UE. For example, the camera may be connected to the processor 2310.

FIG. 25 is merely an example of implementation with respect to the UE, and the present disclosure is not limited thereto. The UE need not essentially include all the components illustrated in FIG. 25. That is, some of the components, for example, the keypad 2320, the GPS chip 2360, the sensor 2365, and the SIM card 2325 may not be essential components. In this case, they may not be included in the UE.

The embodiments of the present disclosure described above are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present disclosure or included as a new claim by subsequent amendment after the application is filed.

In the present disclosure, specific operations described to be performed by the base station may be performed by an upper node of the base station in some cases. That is, in a network including a plurality of network nodes including the base station, it is obvious that various operations performed for communication with the UE can be performed by the base station or network nodes other than the base station. The base station may be replaced with terms such as a fixed station, Node B, eNode B (eNB), and an access point.

The embodiments of the present disclosure may be achieved by various means, for example, hardware, firmware, software, or a combination thereof. In a hardware configuration, the methods according to the embodiments of the present disclosure may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the embodiments of the present disclosure may be implemented in the form of a module, a procedure, a function, etc. For example, software code may be stored in a memory unit and executed by a processor. The memories may be located at the interior or exterior of the processors and may transmit data to and receive data from the processors via various known means.

Although embodiments of the present disclosure have been described using the LTE system, the LTE-A system and the NR system, this is merely an example and embodiments of the present disclosure can be applied to any communication system corresponding to the above definition.

In the present disclosure, specific operations described to be performed by the base station may be performed by an upper node of the base station in some cases. That is, in a network including a plurality of network nodes including the base station, it is obvious that various operations performed for communication with the UE can be performed by the base station or network nodes other than the base station. The base station may be replaced with terms such as a fixed station, Node B, eNode B (eNB), and an access point, and the name of the base station may be used as a comprehensive term including a remote radio head (RRH), eNB, a transmission point (TP), a reception point (RP), a relay, etc.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## Claims

1. A method of operating an electronic device in a wireless communication system, the method comprising:
receiving, from a base station (BS), a radio resource control (RRC) signal including information related to a number of bits in a downlink control information (DCI) field required to represent indicatable beams;
receiving, from the base station, DCI including the DCI field for a beam indication of a beam used in an access link between the electronic device and at least one user equipment (UE) among the indicatable beams; and
transmitting or receiving a signal with the at least one UE based on the beam indication.

2. The method of claim 1, further comprising, before receiving the RRC signal:
transmitting, to the base station, information related to first indices of a plurality of available beams in the access link; and
receiving information on at least one candidate beam set related to some of the plurality of available beams,
wherein the indicatable beams are related to candidate beams included in the at least one candidate beam set, and
wherein a beam indication includes at least one of information on a second index of at least one downlink transmit beam (DL Tx beam) of the candidate beams or information on a third index of at least one uplink receive beam (UL Rx beam) of the candidate beams.

3. The method of claim 2, wherein the at least one candidate beam set includes a DL Tx candidate beam set related to the second index and a UL Rx candidate beam set related to the third index, or
one candidate beam set of the at least one candidate beam set includes DL Tx candidate beams related to the second index and UL Tx candidate beams related to the third index.

4. The method of claim 2, wherein the at least one UE includes a plurality of UEs,
wherein the at least one candidate beam set includes a plurality of candidate beam sets, and
wherein each of the plurality of candidate beam sets is related to each of the plurality of UEs based on a UE identifier (ID) of each of the plurality of UEs.

5. The method of claim 2, wherein the at least one candidate beam set includes a plurality of candidate beam pairs,
wherein each of the plurality of candidate beam pairs includes one DL Tx candidate beam and one UL Tx candidate beam, and
wherein the second index and the third index are related to a DL Tx candidate beam and an UL Tx candidate beam in one candidate beam pair of the plurality of candidate beam pairs.

6. The method of claim 2, wherein first information related to the first indices of the plurality of available beams includes:
information related to a beam width of each of the plurality of available beams; and
information related to a plurality of multi-beam sets,
wherein each of the plurality of multi-beam sets is related to a combination of a plurality of DL Tx beams simultaneously capable of a downlink transmission among the plurality of available beams or a combination of a plurality of UL Rx beams simultaneously capable of an uplink reception among the plurality of available beams.

7. The method of claim 6, wherein second information includes information related to a mapping relationship between the at least one candidate beam set and the plurality of multi-beam sets,
wherein third information includes an index of one multi-beam set of the plurality of multi-beam sets based on the mapping relationship, and
wherein a total of beam widths of the plurality of multi-beam sets configured with the mapping relationship with the at least one candidate beam set is less than or equal to a set beam width.

8. A method of operating a base station (BS) in a wireless communication system, the method comprising:
transmitting, to an electronic device, a radio resource control (RRC) signal including information related to a number of bits in a downlink control information (DCI) field required to represent indicatable beams; and
transmitting, to the electronic device, DCI including the DCI field for a beam indication of a beam used in an access link between the electronic device and at least one user equipment (UE) among the indicatable beams,
wherein the beam indication is related to a transmission or a reception of a signal for the at least one UE of the electronic device in the access link.

9. The method of claim 8, further comprising, before transmitting the RRC signal:
transmitting, to the electronic device, information related to first indices of a plurality of available beams in the access link; and
transmitting information on at least one candidate beam set related to some of the plurality of available beams,
wherein the indicatable beams are related to candidate beams included in the at least one candidate beam set, and
wherein the beam indication includes at least one of information on a second index of at least one downlink transmit beam (DL Tx beam) of the candidate beams or information on a third index of at least one uplink receive beam (UL Rx beam) of the candidate beams.

10. The method of claim 9, wherein the at least one candidate beam set includes a DL Tx candidate beam set related to the second index and a UL Rx candidate beam set related to the third index, or
one candidate beam set of the at least one candidate beam set includes DL Tx candidate beams related to the second index and UL Tx candidate beams related to the third index.

11. The method of claim 9, wherein the at least one UE includes a plurality of UEs,
wherein the at least one candidate beam set includes a plurality of candidate beam sets, and
wherein each of the plurality of candidate beam sets is related to each of the plurality of UEs based on a UE identifier (ID) of each of the plurality of UEs.

12. The method of claim 9, wherein the at least one candidate beam set includes a plurality of candidate beam pairs,
wherein each of the plurality of candidate beam pairs includes one DL Tx candidate beam and one UL Tx candidate beam, and
wherein the second index and the third index are related to a DL Tx candidate beam and an UL Tx candidate beam in one candidate beam pair of the plurality of candidate beam pairs.

13. The method of claim 9, wherein first information related to the first indices of the plurality of available beams includes:
information related to a beam width of each of the plurality of available beams; and
information related to a plurality of multi-beam sets,
wherein each of the plurality of multi-beam sets is related to a combination of a plurality of DL Tx beams simultaneously capable of a downlink transmission among the plurality of available beams or a combination of a plurality of UL Rx beams simultaneously capable of an uplink reception among the plurality of available beams.

14. The method of claim 13, wherein second information includes information related to a mapping relationship between the at least one candidate beam set and the plurality of multi-beam sets,
wherein third information includes an index of one multi-beam set of the plurality of multi-beam sets based on the mapping relationship, and
wherein a total of beam widths of the plurality of multi-beam sets configured with the mapping relationship with the at least one candidate beam set is less than or equal to a set beam width.

15. An electronic device in a communication system, comprising:
a transceiver;
at least one processor; and
at least one memory operably connectable to the at least one processor and configured to store instructions performing operations based on being executed by the at least one processor,
wherein the operations comprise all steps of a method according to any one of claims 1 to 7.

16. A base station (BS) in a communication system, comprising:
a transceiver;
at least one processor; and
at least one memory operably connectable to the at least one processor and configured to store instructions performing operations based on being executed by the at least one processor,
wherein the operations comprise all steps of a method according to any one of claims 8 to 14.

17. A control device controlling an electronic device in a communication system, comprising:
at least one processor; and
at least one memory operably connected to the at least one processor,
wherein the at least one memory is configured to store instructions performing operations based on being executed by the at least one processor, and
wherein the operations comprise all steps of a method according to any one of claims 1 to 7.

18. A control device controlling a base station (BS) in a communication system, comprising:
at least one processor; and
at least one memory operably connected to the at least one processor,
wherein the at least one memory is configured to store instructions performing operations based on being executed by the at least one processor, and
wherein the operations comprise all steps of a method according to any one of claims 8 to 14.

19. One or more non-transitory computer readable mediums storing one or more instructions,
wherein the one or more instructions perform operations based on being executed by one or more processors, and
wherein the operations comprise all steps of a method according to any one of claims 1 to 7.

20. One or more non-transitory computer readable mediums storing one or more instructions,
wherein the one or more instructions perform operations based on being executed by one or more processors, and
wherein the operations comprise all steps of a method according to any one of claims 8 to 14.
